(19) Europäisches Patentamt

European Patent Office

Office européen des brevets

(11) **EP 1 710 746 A1**

(12) **EUROPEAN PATENT APPLICATION**
published in accordance with Art. 158(3) EPC

(43) Date of publication:
**11.10.2006 Bulletin 2006/41**

(51) Int Cl.:
***G06T 1/00*** (2006.01)

(21) Application number: **04793233.0**

(22) Date of filing: **29.10.2004**

(86) International application number:
**PCT/JP2004/016125**

(87) International publication number:
**WO 2005/073909 (11.08.2005 Gazette 2005/32)**

(84) Designated Contracting States:
**AT BE BG CH CY CZ DE DK EE ES FI FR GB GR HU IE IT LI LU MC NL PL PT RO SE SI SK TR**

(30) Priority: **30.01.2004 JP 2004023947**
**16.06.2004 JP 2004177954**

(71) Applicant: **Digital Fashion Ltd.**
**Osaka-shi,**
**Osaka 530-0004 (JP)**

(72) Inventors:
• **Tanaka, Shoji,**
**c/o Digital Fashion Ltd.**
**Osaka-shi, Osaka 5300004 (JP)**

• **Furukawa, Takao,**
**c/o Digital Fashion Ltd.**
**Osaka-shi, Osaka 5300004 (JP)**
• **Ogino, Tomotaka,**
**c/o Digital Fashion Ltd.**
**Osaka-shi, Osaka 5300004 (JP)**

(74) Representative: **Müller-Boré & Partner**
**Patentanwälte**
**Grafinger Strasse 2**
**81671 München (DE)**

(54) **MAKEUP SIMULATION PROGRAM, MAKEUP SIMULATION DEVICE, AND MAKEUP SIMULATION METHOD**

(57) An object is to provide a technique related to a makeup simulation that enables an individual having no specialized knowledge to obtain a high-quality simulation image quickly with simple manipulations. A first image generation portion 20 that generates n normalized transparency layer images in which the transparency of each pixel has been normalized on the basis of n layer images contained in a use-reference image, a second image generation portion 30 that generates n color converted layer images by applying a color conversion processing on a frame image using the color components of the layer images, a mesh setting portion 50 that sets a mesh in a facial region in each of the frame image and a makeup pattern image, an image deformation portion 60 that calculates a difference between the vertices of the meshes set in the both images and deforms a makeup element image in each normalized transparency layer image on the basis of this difference to fit in the facial region of the frame image, and a synthesis portion 70 that synthesizes the color converted layer images and each frame image by means of alpha blending, are provided.

FIG.2

**Description**

Technical Field

The present invention relates to a makeup simulation technique for virtually putting makeup on the face of an individual.

Background Art

There has been known a scheme to virtually put makeup on a still image of the face using an input device, such as a pen tablet, and a commercially available computer that comes installed with commercially available retouch image processing software (for example, Photoshop® available from Adobe Systems, Inc.) by performing a drawing processing for applying cosmetics with a brush according to a drawing instruction from the user.

Also, there has been known a technique for performing a makeup simulation in real time on a moving image of the face by detecting the positions of the mouth and eyes in each frame of the moving image of the face, and by specifying regions to which cosmetics, such as lipstick and rouge, is applied on the basis of the detected positions to provide colors to the specified regions (Patent Document 1)

Patent Document 1: JP-A-2003-44837

Disclosure of the Invention

With the scheme to virtually put makeup on the still image, however, regions are merely specified on the facial image to determine makeup apply regions (makeup element images) on the generated simulation image, and the simulation image is used neither for an image of the same individual that takes on a different expression nor an image of another individual.

Also, according to the invention described in Patent Document 1, the simulation image is obtained by defining the makeup element image by a mathematical expression while adjusting parameters in the mathematical expression in response to a change of the expression on the face. To adjust the parameters, however, specialized knowledge, such as the mathematics and programming, is required. This poses a problem that it is difficult for a user who has some talent for drawing without the specialized knowledge to obtain a simulation image with simple manipulations. In addition, in a case where the makeup element image is made of free curves, adjustments of parameters becomes extremely complicated, and there is a problem that it is a time-consuming work even for a well-trained person having the knowledge of the mathematics and programming. Further, because the makeup image is defined by the mathematical expression, there is a problem that computations take a long time. Furthermore, because this is a method for approximating the makeup element image using the mathematical expression, it is difficult to obtain a high-quality image as if makeup were actually put on the face.

The invention was devised to solve the problems discussed above, and therefore has an object to provide a technique relating to a makeup simulation that enables an individual without any specialized knowledge to obtain a high-quality simulation image quickly with simple manipulations.

A makeup simulation program of the invention is a makeup simulation program that causes a computer to perform a makeup simulation using a reference image composed of n (n is a positive integer) layer images and one facial image, the reference image having been generated previously according to a drawing instruction inputted by a user via a manipulation device, each of the n layer images containing at least one makeup element image in one color, the makeup simulation program being characterized by causing the computer to function as means as follows: first image generation means for generating n first images corresponding to the respective n layer images on the basis of a transparency set in each pixel in each layer image for each of the n layer images; target image acquisition means for acquiring a simulation target image containing a face of an individual as a simulation target; mesh setting means for setting a mesh in a facial region contained in the reference image and setting a mesh in a facial region contained in the simulation target image; deformation means for calculating a difference of positions between corresponding vertices of the meshes set in the reference image and in the simulation target image, and deforming the makeup element image contained in each of the n first images to fit in the facial region contained in the simulation target image on the basis of the calculated difference; second image generation means for generating n second images corresponding to the respective n layer images by performing a specific color conversion processing using color components of the n layer images on the simulation target image; and synthesis means for determining transparencies of the respective n second images and the simulation target image on the basis of the n first images, and synthesizing the simulation target image and the n second images using the determined transparencies.

According to the makeup simulation program of the invention, n first images are generated for the reference image composed of n layer images and one facial image on the basis of the transparency of each layer image forming the reference image, and the mesh is set in the facial region in each of the reference image and the simulation target image. A difference of the positions between corresponding vertices of the mesh set within the region of the face in the reference image and the mesh set within the region of the face in the simulation target image is calculated, and the makeup element image contained in each of the n first images is deformed on the basis of this difference to fit in the facial region in the simulation target image.

The simulation target image is then converted using the color component of each layer image to form the second images, and the transparencies of the second images and the simulation target image are determined on the basis of the first images. The second images and the simulation target image are synthesized according to the transparencies thus determined.

The reference image referred to herein is an image generated by applying a simple work on the facial image of an individual using image generation software, such as Photoshop®, and a manipulation device, such as a pen tablet. A high-quality makeup simulation image can be generated by putting makeup on the simulation target image on the basis of the reference image. The user is thus able to obtain a high-quality makeup simulation image quickly with simple manipulations.

Also, because the reference image is composed of n layer images, it is easy to make a modification, such as the one for deleting a part of makeup element images from the simulation target image on which makeup is virtually applied or changing the colors in a part of the makeup element images.

Brief Description of the Drawings

Fig. 1 is a block diagram showing the hardware configuration of a makeup simulation device according to one embodiment of the invention.

Fig. 2 is a functional block diagram of the makeup simulation device.
Fig. 3 is a flowchart detailing operations of the makeup simulation device.
Fig. 4 is a flowchart detailing operations of the makeup simulation device.
Fig. 5 is a view used to describe Equation (1) and Equation (2).
Fig. 6 is a view used to describe an extraction processing of characteristic points.
Fig. 7 is a view showing one example of an initial mesh.
Figs. 8A and 8B are views showing a mesh set in a use-reference image immediately after a certain height component is provided to floating vertices of the mesh; Fig. 8A shows the mesh when viewed in the Z direction and Fig. 8B shows the mesh when viewed in a diagonal direction.
Figs. 9A and 9B are views showing a mesh set in the use-reference image when computations expressed by Equation (7) and Equation (8) are applied once to each vertex of the mesh; Fig. 9A shows the mesh when viewed in the Z direction and Fig. 9B shows the mesh when viewed in a diagonal direction.
Figs. 10A and 10B are views showing a mesh set in the use-reference image when computations expressed by Equation (7) and Equation (8) are applied 5 times to each vertex of the mesh; Fig. 10A shows the mesh when viewed in the Z direction and Fig. 10B shows the mesh when viewed in a diagonal direction.
Figs. 11A and 11B are views showing a mesh set in the use-reference image when computations expressed by Equation (7) and Equation (8) are applied 10 times to each vertex of the mesh; Fig. 11A shows the mesh when viewed in the Z direction and Fig. 11B shows the mesh when viewed in a diagonal direction.
Figs. 12A and 12B are views showing a mesh set in the use-reference image when computations expressed by Equation (7) and Equation (8) are applied 20 times to each vertex of the mesh; Fig. 12A shows the mesh when viewed in the Z direction and Fig. 12B shows the mesh when viewed in a diagonal direction.
Figs. 13A and 13B are views showing a mesh set in the use-reference image when computations expressed by Equation (7) and Equation (8) are applied 30 times to each vertex of the mesh; Fig. 13A shows the mesh when viewed in the Z direction and Fig. 13B shows the mesh when viewed in a diagonal direction.
Figs. 14A and 14B are views showing a mesh set in the use-reference image when computations expressed by Equation (7) and Equation (8) are applied 60 times to each vertex of the mesh; Fig. 14A shows the mesh when viewed in the Z direction and Fig. 14B shows the mesh when viewed in a diagonal direction.
Fig. 15 is a screen view showing one example when a makeup element image is synthesized into an image in which polygons are overlapping.
Fig. 16 is a view showing a mesh set in a facial region in the use-reference image.
Fig. 17 is a view showing a mesh set in a facial region in a frame image.
Figs. 18A and 18B are views showing a manner in which the makeup element image is deformed; Fig. 18A shows a state before deformation and Fig. 18B shows a state after deformation.
Fig. 19 is a view showing one example of an image synthesized by a synthesis portion.

Fig. 20 is a block diagram showing the detailed configuration of a reference position detection portion.

Fig. 21 is a flowchart detailing operations of the reference position detection portion.

Fig. 22 is a view showing an image to which a morphology processing has been applied.

Figs. 23A and 23B are views showing left eye and right eye correlation value filters; Fig. 23A shows a left eye correlation value filter and Fig. 23B shows a right eye correlation value filter.

Figs. 24A and 24B are is a view showing a global pattern image and left eye and right eye local pattern images; Fig. 24A shows a global pattern image and Fig. 24B shows left eye and right eye local pattern images.

Figs. 25A and 25B are views showing one example of a facial image; Fig. 25A is a case where the face is not tilted and Fig. 25B is a case where the face is tilted.

Figs. 26A and 26B are views showing one example of left eye and right eye correlation value images; Fig. 26A shows a left eye correlation value image and Fig. 26B shows a right eye correlation value image.

Figs. 27A and 27B are views showing left eye and right eye correlation value images moved by a move portion; Fig. 27A shows the left eye correlation value image and Fig. 27B shows the right eye correlation value image.

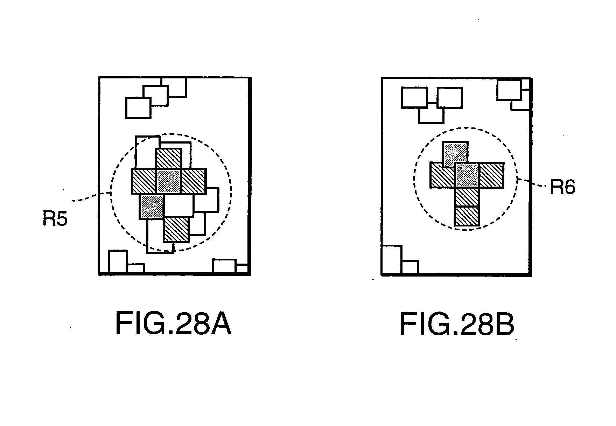

Figs: 28A and 28B are views showing a processing result using a maximum filter; Fig. 28A shows the left eye correlation value image to which a filtering processing using the maximum filter has been applied and Fig. 28B shows the right eye correlation value image to which a filtering processing using the maximum filter has been applied.

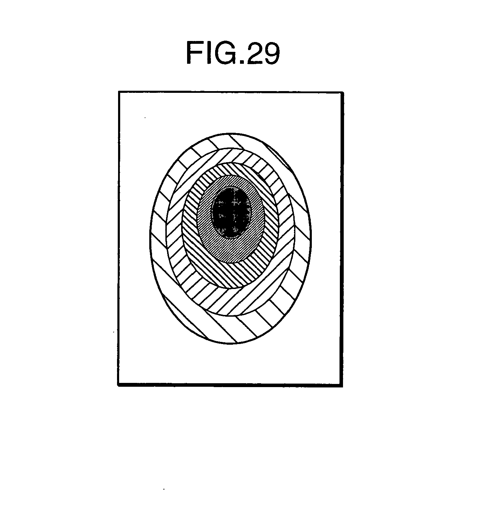

Fig. 29 is a view showing a face center evaluation image.

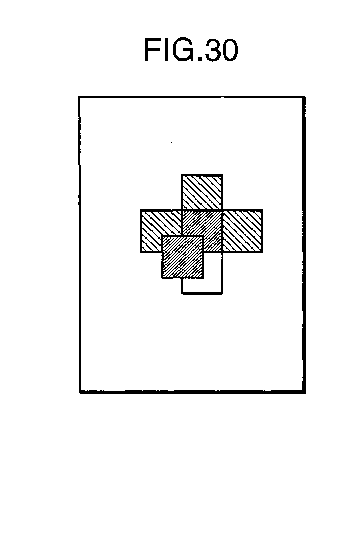

Fig. 30 is a view showing a synthesized image to which a filtering processing using the face center evaluation image has been applied.

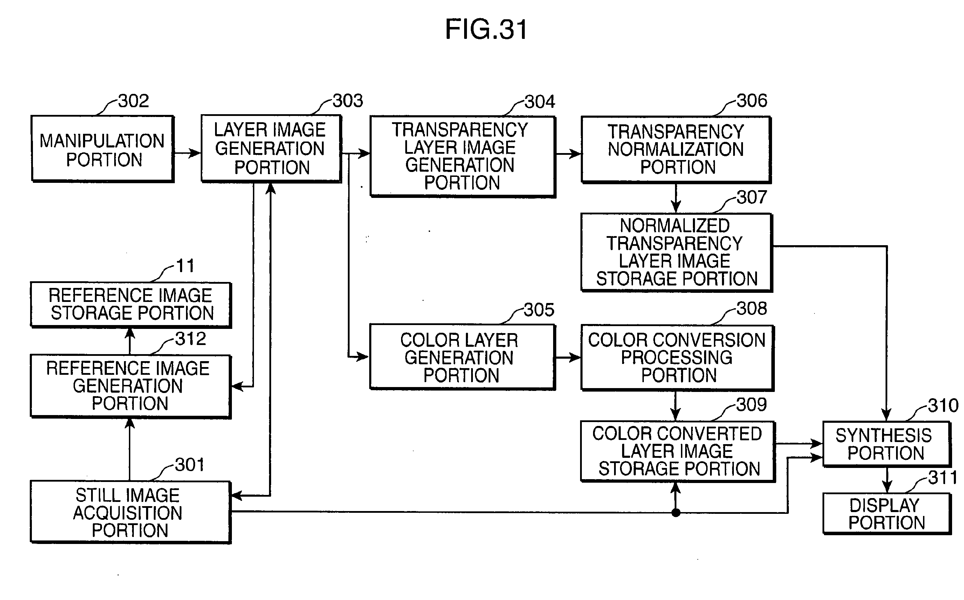

Fig. 31 is a functional block diagram of a makeup simulation device in a reference image generation mode.

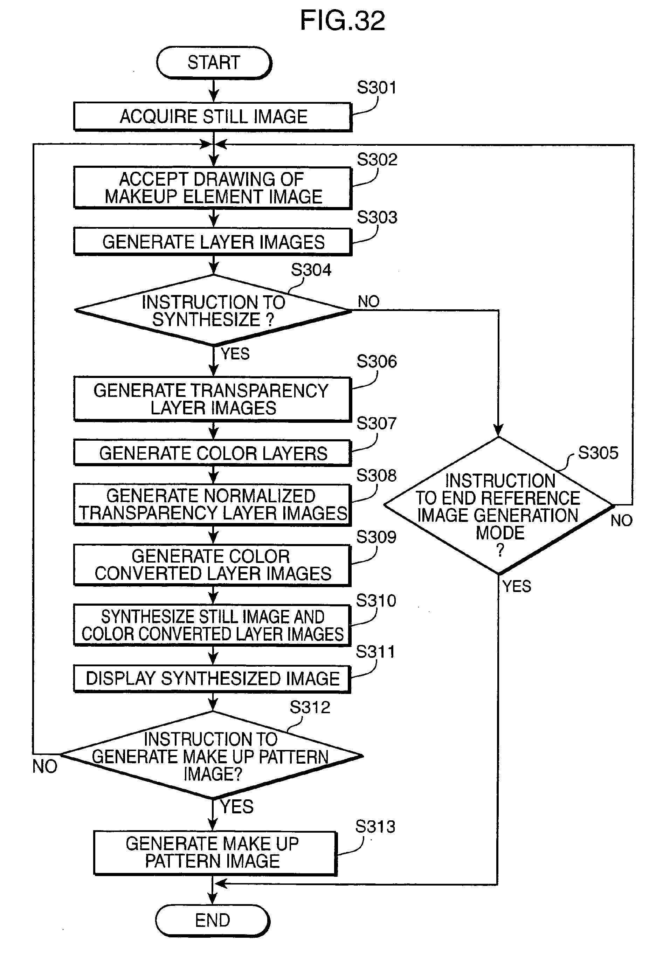

Fig. 32 is a flowchart detailing operations of the makeup simulation device in the reference image generation mode.

Best Mode for Carrying Out the Invention

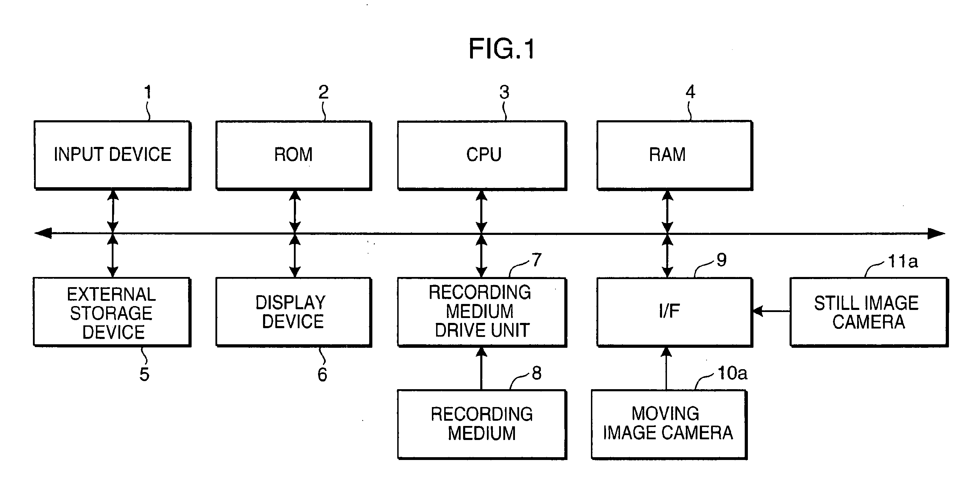

Hereinafter, a makeup simulation device according to one embodiment of the invention will be described with reference to the drawings. Fig. 1 is a block diagram showing the hardware configuration of the makeup simulation device according to one embodiment of the invention.

The makeup simulation device shown in Fig. 1 comprises a typical computer or the like, and includes an input device 1, a ROM (Read Only Memory) 2, a CPU (Central Processing Unit) 3, a RAM (Random Access Memory) 4, an external storage device 5, a display device 6, a recording medium drive unit 7, and an input/output interface (I/F) 9. The respective blocks are connected to an internal bus, and various kinds of data are inputted and outputted via this bus for various processings to be performed under the control of the CPU 3.

The input device 1 comprises a keyboard, a mouse, a pen tablet, and the like, and is used by the operator to input various kinds of data, a manipulation instruction, etc.

The ROM 2 stores a system program, such as BIOS (Basic Input/Output System). The RAM 4 is used as a work area of the CPU 3.

The external storage device 5 comprises a hard disc drive or the like, and stores a specific OS (Operating System), a makeup simulation program described below, etc.

The display device 6 comprises a liquid crystal display device, a CRT (Cathode Ray Tube), or the like, and displays various images under the control of the CPU 3.

The recording medium drive unit 7 comprises a CD-ROM drive, a flexible disc drive, or the like. In this embodiment, the makeup simulation program is stored in the external storage device 5 by inserting a computer-readable recording medium 8, such as a CD-ROM and a flexible disc, having recorded the makeup simulation program into the recording medium drive unit 7 for installation.

The makeup simulation program may be installed in the computer by storing the makeup simulation program in a Web server linked to the Internet and by downloading the makeup simulation program from the Web server. Alternatively, executions of the makeup simulation program may be distributed to the Web server and the computer. For example, the computer is controlled to acquire a moving image of the face and send the moving image to the Web server so that processings of the makeup simulation are performed on the Web server, after which the processing result is transmitted to the personal computer.

A moving image camera 10a is connected to the bus line via the input/output interface (I/F) 9, and acquires various moving images at a specific frame rate, for example, by a CCD area sensor, and outputs the moving images to the computer.

A still image camera 11a is connected to the bus line via the input output I/F 9, and acquires various still images, for example, by a CCD area sensor, and outputs the still images to the computer.

The makeup simulation device has a makeup simulation mode in which a makeup simulation is performed on a moving image on the basis of a reference image that has been generated previously by the user, and a reference image generation mode in which the reference image is generated. The makeup simulation mode will be described first.

(Makeup Simulation Mode)

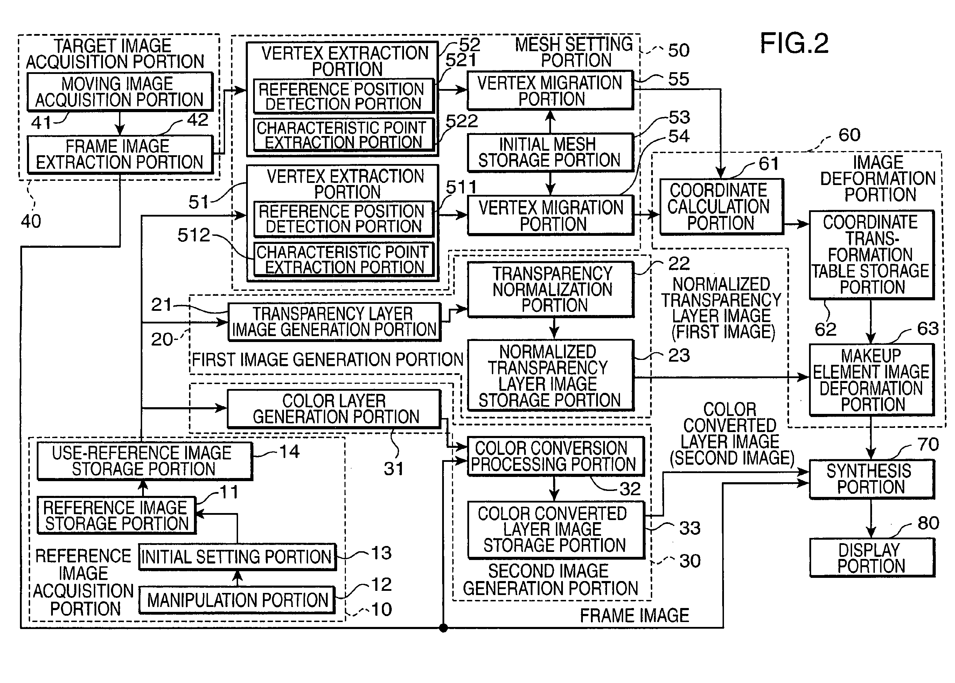

Fig. 2 is a functional block diagram of the makeup simulation device in the makeup simulation mode. The makeup simulation device includes a reference image acquisition portion 10, a first image generation portion 20, a second image generation portion 30, a target image acquisition portion 40, a mesh setting portion 50, an image deformation portion 60, a synthesis portion 70, and a display portion 80. These functions are achieved as the CPU 3 executes the makeup simulation program.

The reference image acquisition portion 10 includes a reference image storage portion 11, a manipulation portion 12, an initial setting portion 13, and a use-reference image storage portion 14. The reference image storage portion 11 comprises the external storage device 5, and has stored one or more than one kind of reference image generated in the reference image generation mode.

The reference image is made of N (N is a positive integer) layer images and one facial image. The facial image is an image acquired by taking a picture of an individual using the still image camera 11a. Each layer image contains one kind of makeup element image. The makeup element image referred to herein means an image that specifies the shape, the color, and so forth of each makeup element, such as lipstick, rouge, and eye shadow.

The makeup element image is an image drawn by the user by manipulating the input device 1 with the use of the drawing software, such as Photoshop®. In the reference image generation mode, one layer image is generated each time one kind of makeup element image is generated. The layer image therefore contains one kind of makeup element image. In this embodiment, assume that one color is set for one kind of makeup element image.

Each pixel in the layer image comprises a color component made of an R (red), G (green), and B (blue) value and a transparency. Because one kind of makeup element image is made of one color, the color component of one layer image has the same RGB value for all the pixels. In short, the color component of one layer image is represented by one kind of RGB value.

The transparency indicates a mixing ratio of the layer images with respect to the facial image. When the transparency shows the maximum value (100%), the layer image alone is displayed and no facial image is displayed. Meanwhile, when the transparency shows the minimum value (0%), no layer image is displayed and the facial image alone is displayed.

To be more specific, let $a_i$ be the transparency of a given pixel in the i'th ($1 \leq i \leq n$) layer image, then $1 - a_i$ is the transparency of the corresponding pixel in the facial image. The transparency is set in response to a handwriting, a pen pressure, or the like on the pen tablet when the makeup element image is drawn.

The facial image comprises color components made of the RGB values. Different from the layer image, the color component of each pixel in the facial image has an RGB value that varies from pixel to pixel. Although the transparency is not set in the facial image itself, the transparency of the facial image is defined by the transparencies of the n layer images.

The manipulation portion 12 comprises the input device 1, and is used by the user to input various manipulation instructions.

The initial setting portion 13 sets one kind of reference image among plural kinds of reference images stored in the reference image storage portion 11 for use in the makeup simulation according to a manipulation instruction from the user inputted via the manipulation portion 12. The reference image thus set is stored in the use-reference image storage portion 14 as a use-reference image.

For an instruction to delete one or more than one layer image from the use-reference image, the corresponding layer image(s) is deleted from the use-reference image and the use-reference image is updated. Also, when a color is specified for any of the layer images in the use-reference image, the value of the color component of the corresponding layer image is changed to the value of the specified color. Hereinafter, assume that the use-reference image is made of n ($n \leq N$) layer images. The use-reference image storage portion 14 comprises the RAM 4, and stores the use-reference image.

The first image generation portion 20 includes a transparency layer image generation portion 21, a transparency normalization portion 22, and a normalized transparency layer image storage portion 23. The transparency layer image generation portion 21 generates n transparency layer images corresponding to the respective n layer images according to the transparencies of the respective pixels forming the layer image. Because the layer image has a transparency that varies from pixel to pixel, the transparency layer image is thought to be an image in which the makeup element image is displayed in variable density according to the transparencies.

The transparency normalization portion 22 generates a normalized transparency layer image by normalizing each pixel by applying a computation expressed by Equation (1) below on each pixel in the transparency layer image generated in the transparency layer image generation portion 21. Also, the transparency normalization portion 22 normalizes the transparency of the facial image by applying a computation expressed by Equation (2) below on each pixel in the facial image.

(Mathematical Formula 1)

$$\beta_i = \frac{\alpha_i^2}{\sum_{j=1}^{n} \alpha_j} \quad \cdots \text{EQUATION (1)}$$

$$\gamma = \frac{\sum_{i=1}^{n} \alpha_i (1 - \alpha_i)}{\sum_{j=1}^{n} \alpha_j} \quad \cdots \text{EQUATION (2)}$$

where $\alpha_i$ represents the transparency of each pixel in the transparency layer image in the i'th layer, $\beta_i$ represents the transparency of each pixel in the normalized transparency layer image, and $\gamma$ represents the transparency of each pixel in the normalized facial image. In Equation (1) and Equation (2) above, the denominator is a sum of the transparencies of the pixels in the transparency layer images in the first through n'th layers.

The normalized transparency layer image storage portion 23 comprises the RAM 4, and stores the normalized transparency layer images generated in the transparency normalization portion 22 and the transparency of the facial image.

The second image generation portion 30 includes a color layer generation portion 31, a color conversion processing portion 32, and a color converted layer image storage portion 33. The color layer generation portion 31 generates n color layers corresponding to the respective n layer images on the basis of the color components set in the layer images. Because the color component of the layer image is made of one kind of RGB value, the color layer is the data made of one kind of RGB value.

The color conversion processing portion 32 converts the RGB value of each pixel forming one frame image extracted by a frame image extraction portion 42 to the HSV color system, and it also generates n color converted layer images by performing a color conversion processing expressed by Equation (3) through Equation (5) below after the RGB value of each of the n color layers is converted to the HSV color system, and converting the resulting image further to the RGB color system. The HSV color system is a color system in which each pixel is represented by components including hue (H), saturation (S), and brightness (V).

$$H_r = H_c \quad \text{... Equation (3)}$$

$$S_r = 0.8 \times S_f + 0.2 \times S_c \text{ ... Equation (4)}$$

$$V_r = 0.8 \times V_f + 0.2 \times V_c \text{ ... Equation (5)}$$

where $H_c$, $S_c$, and $V_c$ represent the HSV value of the color layer, $S_f$ and $V_f$ represent the HSV value of the pixel in the frame image, and $H_r$, $S_r$, and $V_r$ represent the HSV value of each pixel after the color conversion processing. The color converted layer image storage portion 33 comprises the RAM 4, and stores n color converted layer images generated in the color conversion processing portion 32.

The target image acquisition portion 40 includes a moving image acquisition portion 41 and a frame image extraction portion 42. The moving image acquisition portion 41 comprises the moving image camera 10a, and acquires a moving image of the face of an individual. The individual as a subject is the individual for whom the makeup simulation is performed. This individual may be the same individual used as the model of the use-reference image or a different individual. The frame image extraction portion 42 sequentially extracts frame images one by one from the moving image acquired by the moving image acquisition portion 41.

The mesh setting portion 50 includes vertex extraction portions 51 and 52, an initial mesh storage portion 53, and vertex migration portions 54 and 55. The vertex extraction portion 51 includes a reference position detection portion 511 and a characteristic point extraction portion 512.

The reference position detection portion 511 detects the position between the eyebrows in the facial region of the facial image contained in the use-reference image as the reference position. The characteristic point extraction portion 512 extracts the characteristic points from the use-reference image using the reference position detected by the reference position detection portion 511. The characteristic points are points indicating pre-set characteristic points in the face, such as the pupils, the eyebrows, head, the inner corners of the eyes, the outer corners of the eyes, the tip of the nose, the bases of the upper lip and the lower lip, etc.

The vertex extraction portion 52 includes a reference position detection portion 521 and a characteristic point extraction portion 522. The reference position detection portion 521 detects the position between the eyebrows in the facial region of the frame image extracted by the frame image extraction portion 42 as the reference position. The characteristic point extraction portion 522 extracts the characteristic points from the frame image using the reference position detected by the reference position detection portion 521 by the same method used in the characteristic point extraction portion 512.

The initial mesh storage portion 53 stores an initial mesh that is the master of the mesh set in the facial region of an individual. The initial mesh has been formed previously on the basis of the facial image of an individual, and the respective vertices of the mesh are set in the facial region in such a manner that the vertices of a part of the mesh are positioned on the characteristic points. Hereinafter, of the respective vertices of the initial mesh, the vertices positioned on the characteristic points are referred to as the characteristic vertices, and the vertices other than the characteristic vertices are referred to as the floating vertices. In this embodiment, triangular polygons are used as polygons forming the mesh. However, the polygons are not limited to the triangular polygons, and other polygons, such as square and pentagonal polygons, can be used as well. The initial mesh formed by Metasequoia as shareware is used herein.

The vertex migration portion 54 sets the mesh in the facial region of the facial image in the use-reference image by moving the characteristic vertices of the initial mesh to the corresponding characteristic points extracted from the use-reference image and then by moving the floating vertices according to a quantity of migration of the characteristic vertices while keeping the distances among the respective vertices of the initial mesh constant (length limitation) under the limiting condition that the polygons forming the mesh will not overlap one on another. The migration of the respective vertices of the mesh will be described in detail below.

The vertex migration portion 55 sets the mesh in the facial region of the frame image by the same method used in the vertex migration portion 54.

The image deformation portion 60 includes a coordinate calculation portion 61, a coordinate transformation table storage portion 62, and a makeup element image deformation portion 63. The coordinate calculation portion 61 calculates a differential vector of each vertex using a difference of the positions between the corresponding vertices of the mesh set in the facial region of the frame image and of the mesh set in the facial region of the facial image in the use-reference image, and creates a coordinate transformation table in which the respective vertices of the mesh are correlated with the differential vectors of the respective vertices.

The coordinate transformation table storage portion 62 comprises the RAM 4, and stores the coordinate transformation table created in the coordinate calculation portion 61.

The makeup element image deformation portion 63 sets the mesh set in the use-reference image in each of the n normalized transparency layer images, and deforms the makeup element images within the n normalized transparency layer images by moving the respective vertices of the mesh thus set by quantities comparable to the differential vectors set forth in the coordinate transformation table.

The synthesis portion 70 synthesizes the frame image and the n color converted layer images by alpha blending using the transparency ($\beta_i$ described above) of each pixel in the n normalized transparency layer images containing the makeup element images deformed by the makeup element image deformation portion 63 as an alpha value of each pixel in the color converted layer images, and the normalized transparency ($\gamma$ described above) of each pixel in the facial image as an alpha value of each pixel in the frame image. The alpha blending is expressed by Equation (6) below.

(Mathematical Formula 2)

$$\vec{C_r} = \gamma \ \vec{C_f} + \sum_{i=1}^{n} \beta_i \ \vec{C_i} \quad \cdots \ \text{EQUATION (6)}$$

where a vector $C_r$ represents the RGB value after the synthesis, a vector $C_f$ represents the RGB value of each pixel in the frame image, a vector $C_i$ represents the RGB value of each pixel in the color converted layer images, $\beta_i$ is expressed by Equation (1) above, and $\gamma$ is expressed by Equation (2) above.

The display portion 80 comprises the display device 6, and displays an image synthesized in the synthesis portion 70, that is, a moving image of the face on which the makeup is virtually applied.

In this embodiment, the first image generation portion 20 corresponds to first image generation means, the second image generation portion 30 corresponds to second image generation means, the frame image extraction portion 42 corresponds to target image acquisition means, the mesh setting portion 50 corresponds to mesh setting means, the image deformation portion 60 corresponds to image deformation means, the synthesis portion 70 corresponds to synthesis means, and the use-reference image corresponds to a reference image.

(Operations of Makeup Simulation Device)

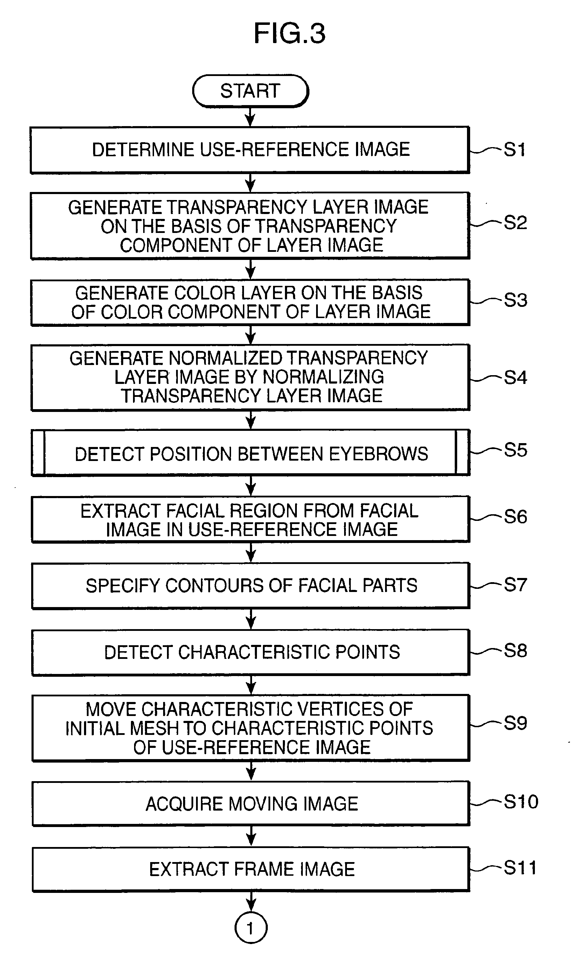

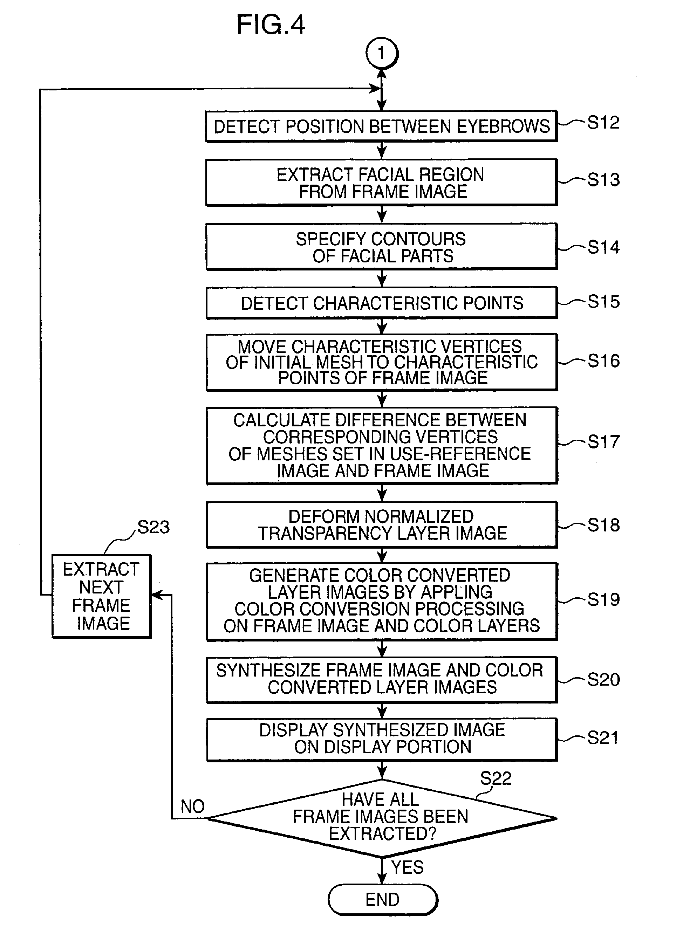

Operations of the makeup simulation device will now be described according to the flowcharts shown in Fig. 3 and Fig. 4.

Initially, in Step S1, the initial setting portion 13 determines one kind of reference image chosen by the user as the use-reference image, and makes the use-reference image storage portion 14 store this reference image. In this case, a list image of the reference images that have been stored in the reference image storage portion 11 is displayed on the display portion 80 by the initial setting portion 13. A reference image in the list image that is clicked by the user is determined as the use-reference image.

Further, when the user makes a manipulation instruction that any of the n layer images forming the use-reference image will not be used in the makeup simulation, the initial setting portion 13 deletes the corresponding layer image(s) from the use-reference image and updates the use-reference image. In this instance, the updated use-reference image is displayed on the display portion 80.

Also, when the user makes a manipulation instruction to specify a color for any of the n layer images to be used in the makeup simulation, the initial setting portion 13 changes the value of the color component of the corresponding layer image to the value of the specified color and updates the use-reference image. In this instance, the updated use-reference image is displayed on the display portion 80.

Also, after the user clicks on the makeup element image contained in the use-reference image displayed on the display portion 80, he changes the color of the makeup element image by clicking a desired color in the color pallet displayed on the display portion 80 for the user to specify a color.

In Step S2, the transparency layer image generation portion 21 reads out the use-reference image from the use-reference image storage portion 14, and generates n transparency layer images corresponding to the respective n layer images contained in the use-reference image thus read out.

In Step S3, the color layer generation portion 31 reads out the use-reference image from the use-reference image storage portion 14, and generates n color layers corresponding to the respective n layer images contained in the use-reference image thus read out.

In Step S4, the transparency layer image generation portion 21 generates n normalized transparency layer images by applying Equation (1) above to the respective n transparency layer images to normalize the transparency of each pixel forming each transparency layer image, and it also normalizes the transparency of each pixel forming the facial image contained in the reference image using Equation (2) above.

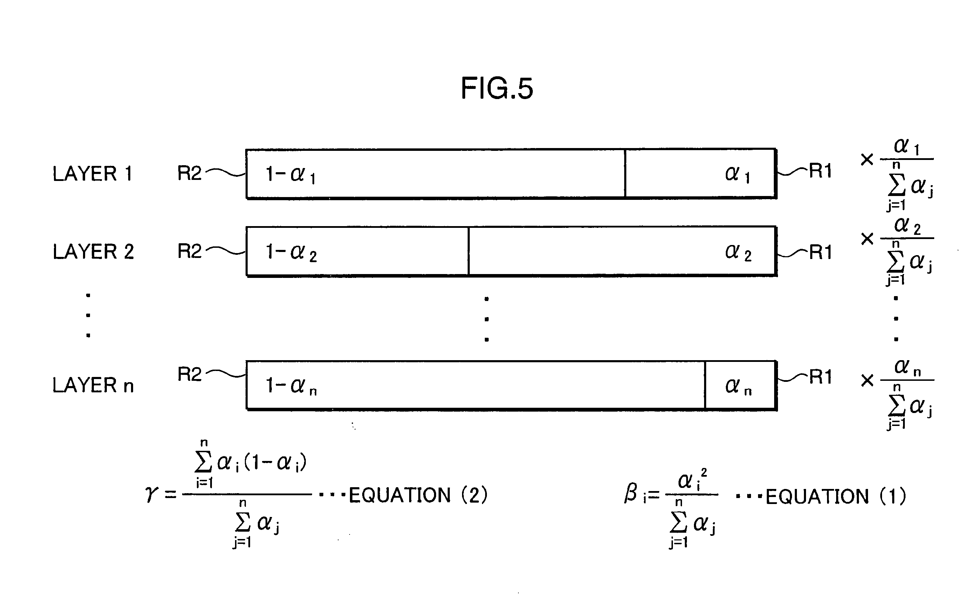

Fig. 5 is a view used to describe Equation (1) and Equation (2) above. Fig. 5 shows bar charts corresponding to respective layers 1 through n, and each bar chart shows the relation of the transparency $\alpha_i$ of the transparency layer image in the i'th layer and the transparency $(1 - \alpha_i)$ of the facial image in the i'th layer. For example, in the bar chart of the layer 1, the region R1 on the right indicates the transparency of the transparency layer image in the first layer, and the region R2 on the left indicates the transparency of the facial image in the first layer.

The mathematical expression shown on the right of each bar chart indicates a ratio of the transparency $\alpha_i$ of each transparency layer image to a sum of the transparencies $\alpha_1$ through $\alpha_n$ of the transparency layer images in the first layer through the n'th layer. Equation (1) above is obtained by multiplying the transparency $\alpha_i$ by this ratio.

Also, Equation (2) above is obtained by multiplying the transparency $1 - \alpha_i$ of the facial image by the ratio of the transparency $\alpha_i$ of each transparency layer image shown on the right of each bar chart and by finding a sum from 1 through n. It should be noted that $\beta_i$ and $\gamma$ have the relation expressed by $\Sigma\beta_i + \gamma = 1$, where $\Sigma\beta_i = \beta_1 + \beta_2 + \cdots + \beta_n$. The

reason why normalization is performed will be described below.

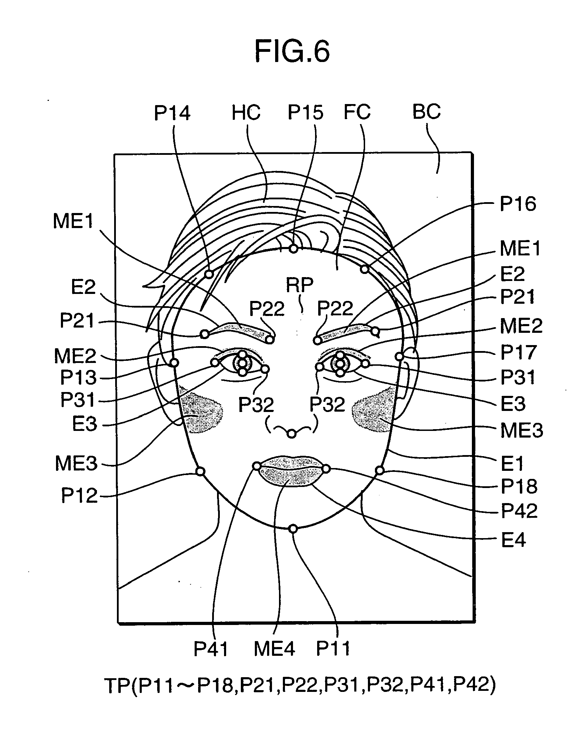

In Step S5 shown in Fig. 3, the reference position detection portion 511 detects the position between the eyebrows from the facial image contained in the use-reference image. This processing will be described in detail below. Fig. 6 is a view used to describe an extraction processing of the characteristic points. Referring to Fig. 6, ME1 through ME4 represent the makeup element images. In this case, as is shown in Fig. 6, the position between the eyebrows, RP, is detected from the facial image.

In Step S6 shown in Fig. 3, the characteristic point extraction portion 522 extracts the background region representing the background of an individual, a hair region representing the hair of the individual, and the facial region representing the face of the individual from the facial image contained in the use-reference image using the method described in JP-A-2003-44837. In this case, as is shown in Fig. 6, the background region BC, the hair region HC, and the face region FC are extracted.

In Step S7 shown in Fig. 3, the characteristic point extraction portion 522 performs an edge extraction processing on the facial region extracted from the facial image contained in the use-reference image, and specifies the contours of the face and the facial parts, such as the eyes, from the relation of the edge thus extracted and the position between the eyebrows, RP, detected earlier. In this case, as is shown in Fig. 6, the contour E1 of the face, the counters E2 of the eyebrows, the contours E3 of the eyes, and the contour E4 of the mouth are specified.

In Step S8 shown in Fig. 3, the characteristic point extraction portion 512 detects the characteristic points from the contours E1 through E4, respectively, of the face, eyebrows, eyes, and the mouth thus specified. In this case, as is shown in Fig. 6, eight characteristic points P11 through P18 are detected in the contour E1 of the face by detecting inflection points of the gradient. The characteristic points are collectively referred to as the characteristic points TP. By detecting the end portions, the positions of the outer ends and the inner ends of the eyebrows are detected in the contour E2 of the eyebrows as characteristic points P21 and P22, respectively. Further, by detecting the end portions, the positions of the outer corners and the inner corners of the eyes are detected in the contours E3 of the eyes as characteristic points P31 and P32, respectively. Furthermore, by detecting the end portions, the bases of the upper lip and the lower lip are detected in the contour E4 of the mouth as characteristic points P41 and P42.

The contours of the facial parts to be detected are not limited to the contours E1 through E4 of the face, the eyebrows, the eyes, and the mouth, respectively, and the contour of any other facial part, for example, the nose, may be specified.

Alternatively, of these four kinds of facial parts, the contour of any one of these facial parts may be omitted. The characteristic points are not limited to those shown in Fig. 6, either. Other characteristic points may be detected or part of the characteristic points shown in the drawing may be omitted.

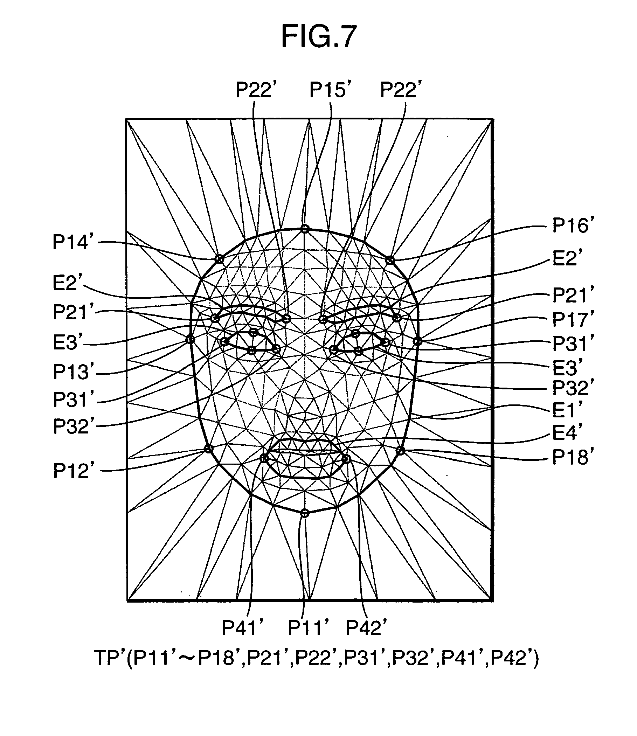

In Step S9 shown in Fig. 3, the vertex migration portion 54 moves the characteristic vertices of the initial mesh to the corresponding characteristic points in the use-reference image. Fig. 7 is a view showing one example of the initial mesh. As is shown in Fig. 7, the initial mesh comprises plural triangular polygons. All the vertices of the initial mesh comprise the characteristic vertices TP' and the floating vertices FP'.

The characteristic vertices TP' are positioned on the contours E1' through E4' of the face, the eyebrows, the eyes, and the mouth, respectively. Eight characteristic vertices P11' through P18' are set on the contour E1' of the face. Characteristic vertices P21' and P22' are set on the contour E2' of the eyebrows, and they are set at the positions of the outer ends and the inner ends of the eyebrows, respectively.

Characteristic vertices P31' and P32' are set on the contours E3' of the eyes, and they are set at the positions of the outer corners and the inner corners of the eyes, respectively.

Characteristic vertices P41' and P42' are set on the contour E4' of the mouth, and they are set at the positions of the bases of the upper lip and the lower lip.

The vertex migration portion 54 superimposes the initial mesh on the use-reference image shown in Fig. 6, and moves the characteristic vertices TP' of the initial mesh to the corresponding characteristic points TP in the use-reference image. The vertex migration portion 54 then generates 3-D data by providing a certain height component (Z component) to the floating vertices FP' of the initial mesh, and moves the floating vertices FP' by repetitively applying computations expressed by Equation (7) and Equation (8) below to the floating vertices FP'. As a result, a mesh is set for the use-reference image within the length limitation in such a manner that no polygons forming the mesh are overlapping.

(Mathematical Formula 3)

$$\vec{P'}_i = \vec{P}_i - \lambda\,(\,|\,\vec{P}_i - \vec{P}_j\,| - l_{ij})(\vec{P}_i - \vec{P}_j) \qquad \cdots \text{EQUATION (7)}$$

$$\vec{P'_j} = \vec{P_j} + \lambda \left( \mid \vec{P_i} - \vec{P_j} \mid - l_{ij} \right)(\vec{P_i} - \vec{P_j}) \qquad \cdots \text{EQUATION (8)}$$

where a vector $P_i$ represents the coordinate of the vertex of the mesh, a vector $P_j$ represents the coordinate of the vertex of the mesh adjacent to the vector $P_i$, a vector $P'_i$ represents the vector $P_i$ to which the computations have been applied, a vector $P'_j$ represents the vector $P_j$ to which the computations have been applied, $l_{ij}$ represents the length of a line segment linking the vector $P_i$ and the vector $P_j$ in the initial mesh, and $\lambda$ represents a constant value.

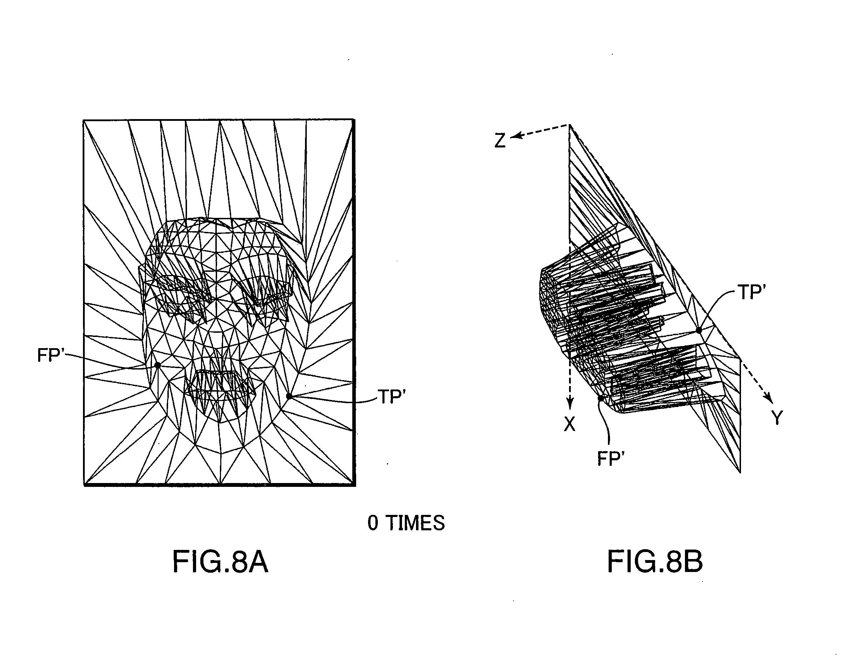

Figs. 8A and 8B are views showing a mesh set in the use-reference image immediately after the characteristic vertices TP' of the initial mesh are moved to the corresponding migration-target positions in the use-reference image and the certain height component is provided to the floating vertices FP'. Fig. 8A shows the mesh when viewed in the Z direction, and Fig. 8B shows the mesh when viewed in a diagonal direction. As is shown in Fig. 8B, it is understood that the respective floating vertices FP' are moved by a certain distance in the Z direction. Also, it is understood that the respective characteristic vertices are located on the X-Y plane. The mesh setting portion 50 applies the computations expressed by Equation (7) and Equation (8) above sequentially to each vertex.

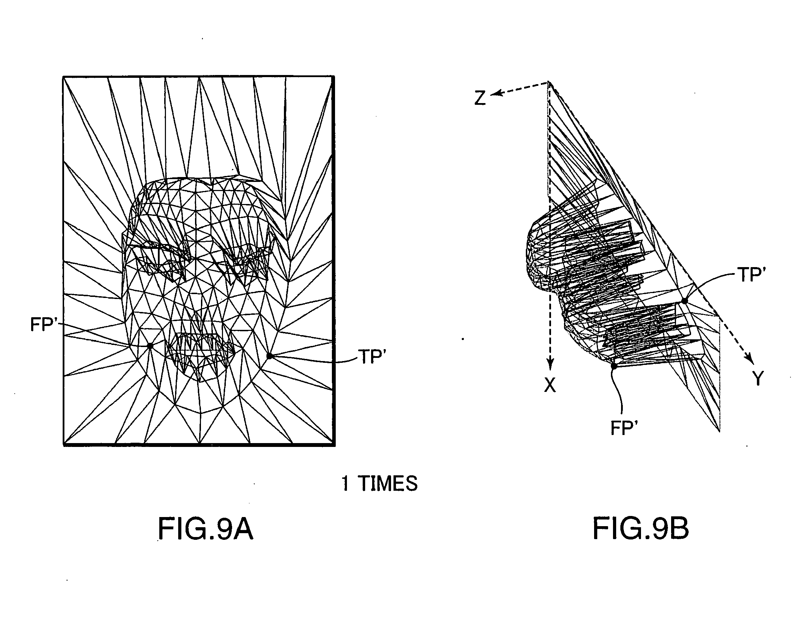

Figs. 9A and 9B are views showing a mesh set in the use-reference image when the computations expressed Equation (7) and Equation (8) are applied once to each vertex shown in Figs. 8A and 8B. Fig. 9A shows the mesh when viewed in the Z direction, and Fig. 9B shows the mesh when viewed in a diagonal direction. As is shown in Fig. 9B, it is understood that the values of the Z components are slightly smaller for the respective floating vertices FP' than those in Fig. 8B. Also, as is shown in Fig. 9A, it is understood that overlapping of the polygons forming the mesh is slightly improved for the respective floating vertices FP' in comparison with the case of Fig. 8B.

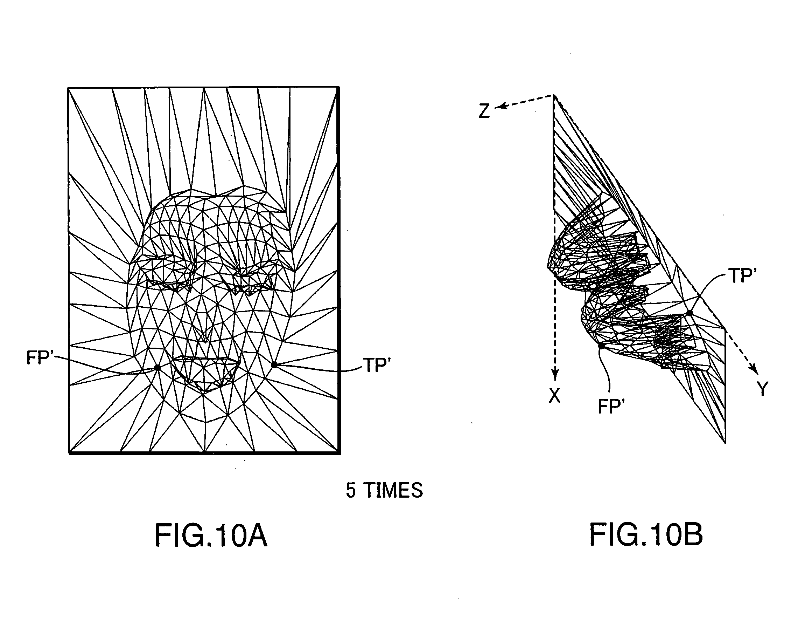

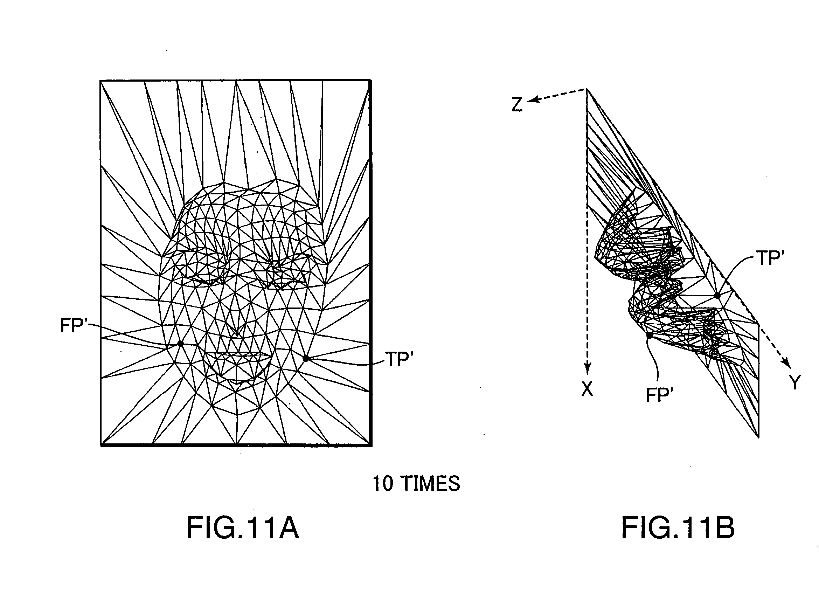

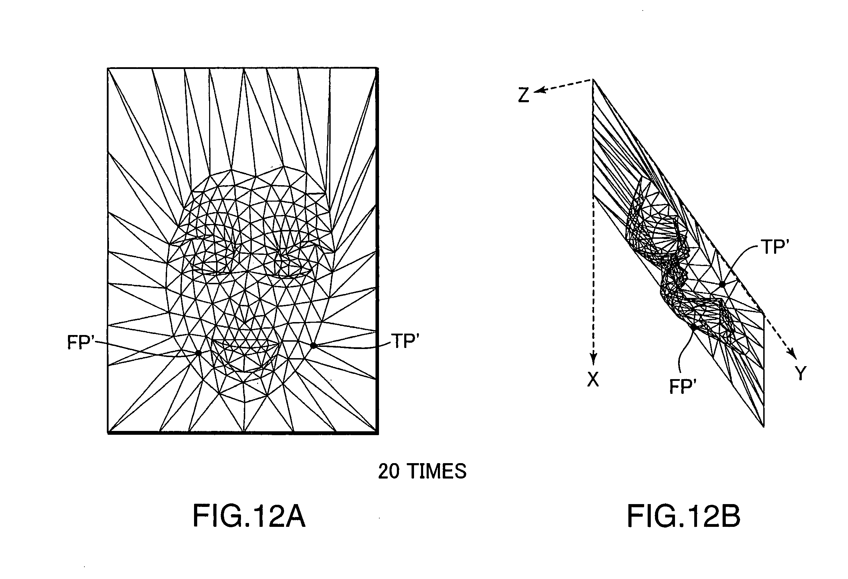

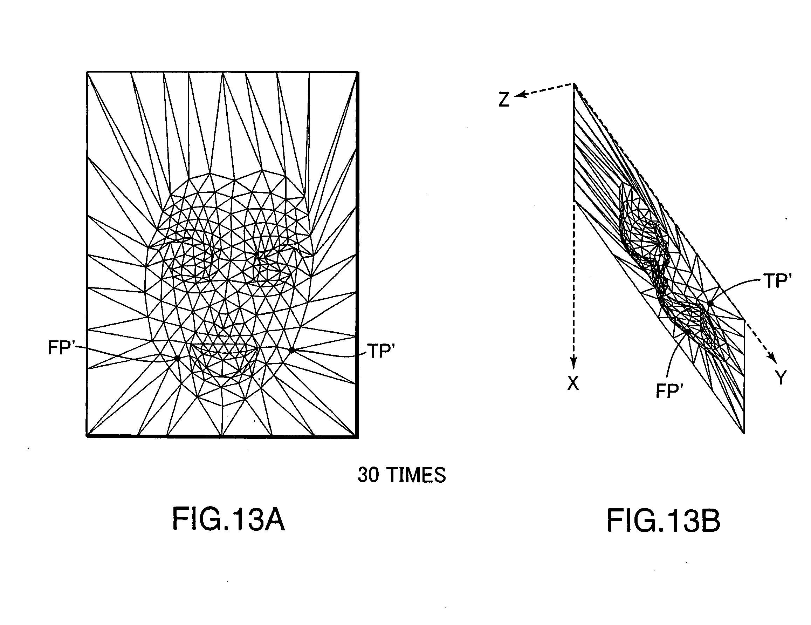

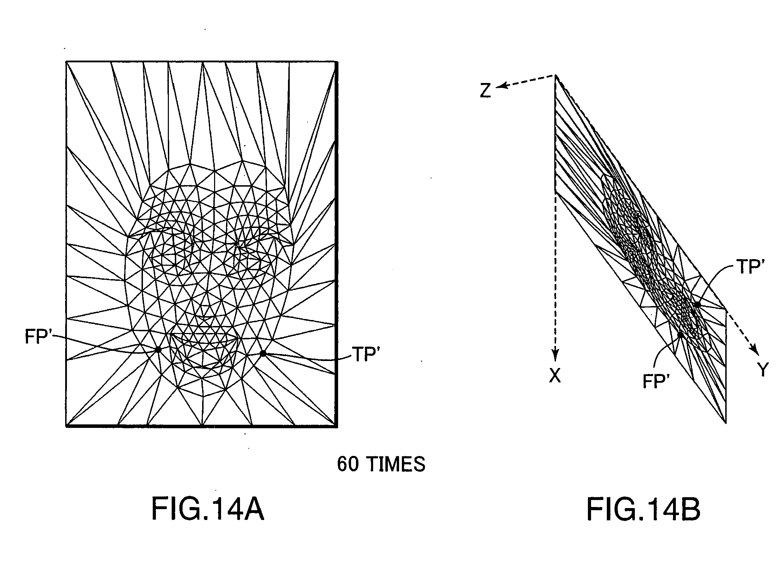

Figs. 10A and 10B through Figs. 14A and 14B are views showing meshes set in the use-reference image when computations expressed by Equation (7) and Equation (8) above are applied, respectively, 5 times, 10 times, 20 times, 30 times, and 60 times to the respective floating vertices FP' shown in Figs. 8A and 8B. In any of Figs. 10A and 10B through Figs. 14A and 14B, the drawing labeled with a capital A shows the mesh when viewed in the Z direction, and the drawing labeled with a capital B shows the mesh when viewed in a diagonal direction. As are shown in Fig. 10B through Fig. 14B, the values of the height components of the respective floating vertices FP' as a whole become smaller with an increasing number of times of the computations expressed by Equation (7) and Equation (8) above applied to each vertex. It is understood that the height components of the respective floating vertices FP' are almost 0 in the mesh shown in Fig. 14B to which the computation expressed by Equation (7) and Equation (8) above is applied 60 times. Also, as are shown in Fig. 10A through Fig. 14A, it is understood that the overlapping of the polygons forming the mesh is eventually eliminated by increasing the number of times the computations expressed by Equation (7) and Equation (8) above are applied.

By deforming the initial mesh on the image plane without introducing the height within the length limitation, it is possible to some extent to set the mesh in the facial region while keeping the positional relation among the vertices of the mesh before deformation in a well balanced manner.

However, in a case where the initial mesh is deformed on the image plane without introducing the height by taking the length limitation alone into account, the polygons forming the mesh are more likely to overlap one on another. The overlapping of the polygons occurs when the size of the facial region is smaller than the size of the initial mesh. This is analogous to wrinkles made when an actual cloth is pressed against the floor in a size smaller than its original size.

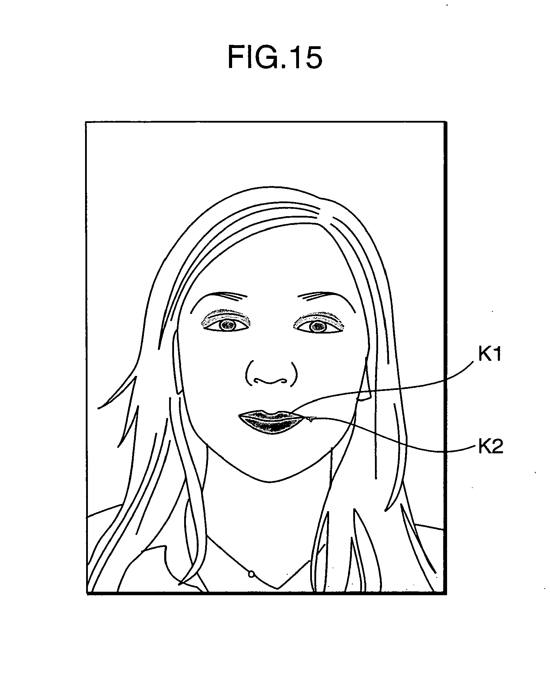

Fig. 15 is a screen view showing one example when a makeup element image is synthesized into an image in which the polygons forming the mesh are overlapping. In the case of Fig. 15, it is understood that the contour K1 of the lipstick is not of the shape that conforms to the contour of the mouth, and the lipstick K2 runs off the lips. As has been described, when the polygons forming the mesh are overlapping, the makeup element image is synthesized into the image of the face unnaturally.

The vertex migration portion 54 therefore prevents the mesh from being set in the use-reference image while causing the polygons to overlap one another by providing each vertex with the height component and calculating the position of the floating vertex three-dimensionally using Equation (7) and Equation (8) above.

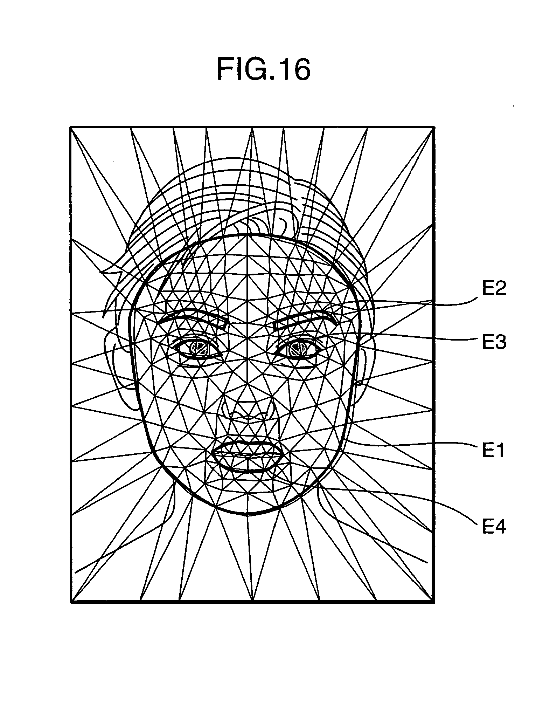

Fig. 16 is a view showing a mesh set in the facial region in the use-reference image. As is shown in Fig. 16, it is understood that the mesh is set in the facial region in a well balanced manner without causing the polygons forming the mesh to overlap one another. It is also understood that the vertices of the mesh are positioned on the contours E1 through E4 of the face, the eyebrows, the eyes, and the mouth, respectively.

In Step S10 shown in Fig. 3, the moving image acquisition portion 41 acquires a moving image of the face of an individual. In Step S11, the frame image extraction portion 42 extracts one frame image from the moving image acquired by the moving image acquisition portion 41. The frame image extraction portion 42 may extract frame images one by one or it may extract frame images by skipping a certain number of frames.

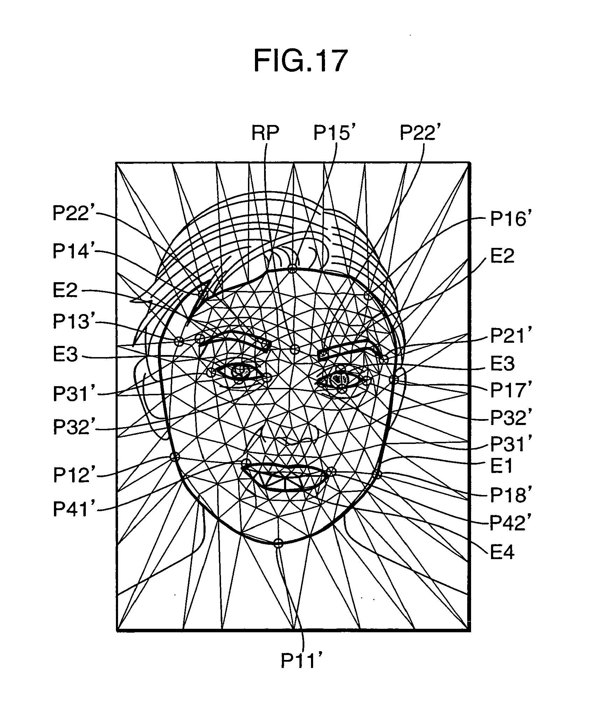

In Step S12 shown in Fig. 4, the reference position detection portion 521 detects the position between the eyebrows from the frame image in the same manner as in Step S5. Fig. 17 is a view showing a mesh set in the facial region in the frame image. It is understood that the orientation of the face is changed in the frame image shown in Fig. 17 with respect to the use-reference image shown in Fig. 6. In this case, the position between the eyebrows, RP, is detected as is shown in Fig. 17.

In Step S13, the characteristic point extraction portion 522 extracts the background region BC, the hair region HC, and the facial region FC in the facial region in the frame image in the same manner as in Step S6. In Step S14, the characteristic point extraction portion 522 performs the edge extraction processing on the facial region in the frame image and specifies the contours E1 through E4, respectively, of the face, the eyebrows, the eyes, and the mouth (see Fig. 17) in the same manner as in Step S7.

In Step S15, the characteristic point extraction portion 522 extracts the characteristic points TP (omitted in Fig. 17) from the contours E1 through E4, respectively, of the face, the eyebrows, the eyes, and the mouth thus specified in the same manner as in Step S8.

In Step S16, the vertex migration portion 54 moves the characteristic vertices TP' of the initial mesh to the characteristic points TP of the frame image in the same manner as in Step S9. In this case, as is shown in Fig. 17, it is understood that even when the orientation of the face is changed with respect to the use-reference image, the mesh can be set in the facial region in a well balanced manner without causing the polygons to overlap one on another.

In Step S17, the coordinate calculation portion 61 calculates a difference of the positions between the corresponding vertices of the mesh set in the use-reference image and of the mesh set in the frame image, and creates a coordinate transformation table, which is stored in the coordinate transformation table storage portion 62. This coordinate transformation table is updated for each frame image.

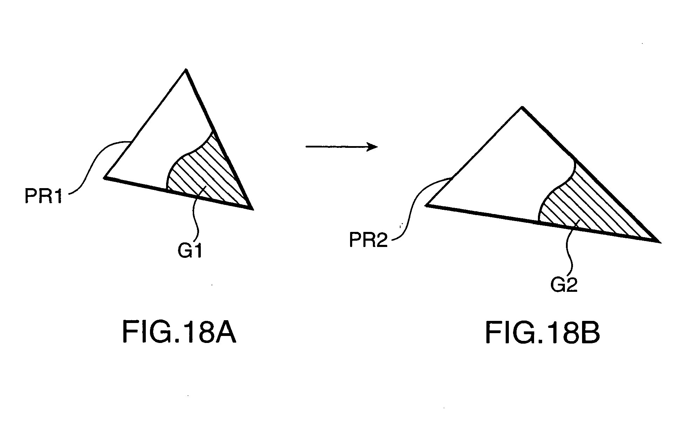

In Step S18, the makeup element image deformation portion 63 deforms the makeup element image contained in the normalized transparency layer image with reference to the coordinate transformation table. Figs. 18A and 18B are views showing a manner in which the makeup element image is deformed. Fig. 18A shows a state before deformation and Fig. 18B shows a state after deformation. A polygon PR1 on which a makeup element image G1 is drawn as is shown in Fig. 18A is deformed to a polygon PR2 as is shown in Fig. 18B. Accordingly, the makeup element image G1 is deformed to a makeup element image G2.

In Step S19 shown in Fig. 4, the color conversion processing portion 32 generates n color converted layer images by applying the color conversion processing expressed by Equation (3) through Equation (5) above to both the frame image extracted in Step S11 and the color layers generated by the color layer generation portion 31. The n color converted layer images thus generated are stored in the color converted layer image storage portion 33.

In Step S20, the synthesis portion 70 synthesizes the frame image and the color converted layer images generated in the color conversion processing portion 32 using Equation (6) above.

The reason why the transparency normalization portion 22 normalizes the transparency $\alpha_i$ and the transparency $1 - \alpha_i$ will now be described. Equation (9) through Equation (11) below show typical mathematical expressions used in the alpha blending.

(Mathematical Formula 4)

$$\vec{C_r} = (1 - \alpha_1)\vec{C_f} + \alpha_1\vec{C_1} \quad \cdots \text{EQUATION (9)}$$

$$\vec{C_r} = \{(1 - \alpha_1)\vec{C_f} + \alpha_1\vec{C_i}\}(1 - \alpha_2) + \alpha_2\vec{C_2} \quad \cdots \text{EQUATION (10)}$$

$$= (1 - \alpha_1)(1 - \alpha_2)\vec{C_f} + \alpha_1(1 - \alpha_2)\vec{C_1} + \alpha_2\vec{C_2}$$

$$\vec{C_r} = \{\prod_{i=1}^{n}(1 - \alpha_i)\}\vec{C_f} + \sum_{i=1}^{n}[\{\alpha_j\prod_{j=i+1}^{n}(1 - \alpha_j)\}\vec{C_j}] \quad \cdots \text{EQUATION (11)}$$

where a vector $C_r$ represents the RGB value of each pixel after the synthesis, a vector $C_f$ represents the RGB value of each pixel in the facial image contained in the use-reference image, and a vector $C_i$ represents the RGB value of each pixel in the color converted layer image in the i'th (i = 1 to n) layer. Also, Equation (9) above shows a case where one color converted layer image is synthesized into the facial image, Equation (10) above shows a case where two color converted layer images are synthesized into the facial image, and Equation (11) above shows a case where n color converted layer images are synthesized into the facial image. When the order of the color converted layers is rearranged as is shown in Equation (11) above, the second term of Equation (11) above takes a different value in response to the rearrangement of the order. The value of the vector $C_r$ therefore depends on the order of the color converted layers.

The makeup simulation device therefore normalizes the transparency $\alpha_i$ of each pixel in the normalized transparency layer image and the transparency 1 - $\alpha_i$ of each pixel in the facial image to $\beta_i$ and $\gamma$, respectively, using Equation (1) and Equation (2) above, so that the vector $C_r$ takes the same value even when the order of the color converted layer images are rearranged. The makeup simulation device thus prevents the value of the vector $C_r$ from depending on the order of the layers by using $\beta_i$ as the alpha value of the color converted layer image and $\gamma$ as the alpha value of the facial image.

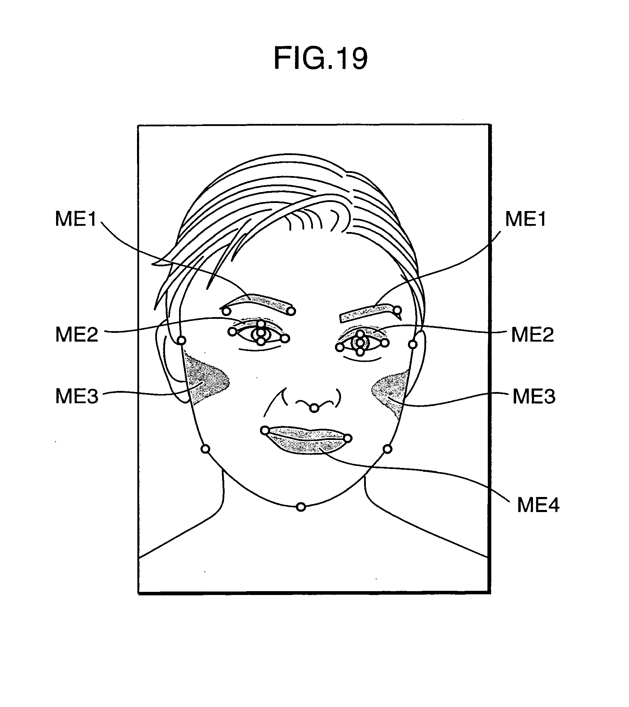

In Step S21, the display portion 80 displays the image synthesized in the synthesis portion 70. Fig. 19 is a view showing one example of the image synthesized in the synthesis portion 70. As is shown in Fig. 19, it is understood that the makeup element images ME1 through ME4 shown in Fig. 6 are deformed to match with a change on the face, and they are therefore displayed on the frame image without giving a feeling of strangeness. It should be noted that the makeup element images ME1 through ME4 shown in Fig. 6 and Fig. 17 are mere examples, and other makeup element images may be contained or any of these makeup element images may be omitted.

In Step S22 shown in Fig. 4, the frame image extraction portion 42 judges whether all the frame images have been extracted. When all the frame images have been extracted (YES in Step S22), the processing is terminated. On the other hand, when not all the frame images have been extracted in Step S22 (NO in Step S22), the next frame image is extracted (Step S23), and the flow returns to the processing in Step S12.

As has been described, according to the makeup simulation device, the makeup element images contained in the reference image generated previously by the user are deformed to fit in the frame image by manipulations on the pen tablet or the like and displayed on the frame image. The user is thus able to obtain quickly a high-quality makeup simulation image as if makeup were actually put on the face by merely performing manipulations as simple as manipulating the manipulation device, such as the pen tablet. Also, because the simulation is performed on the basis of the layer images, it is easy to make the settings, such as the setting for deleting a part of the makeup element images from the reference image or changing the color in a part of the makeup element images.

Further, because the transparency of each pixel in the transparency layer image and the transparency of each pixel in the facial image are normalized, the alpha blending that does not depend on the order of layers can be achieved. Furthermore, because the meshes are set in the facial regions in the reference image and the frame image within the length limitation of the initial mesh without causing the polygons forming the mesh to overlap one on another, the makeup element images can be displayed on the frame image naturally without giving a feeling of strangeness.

(Detailed Configuration of Reference Position Detection Portions)

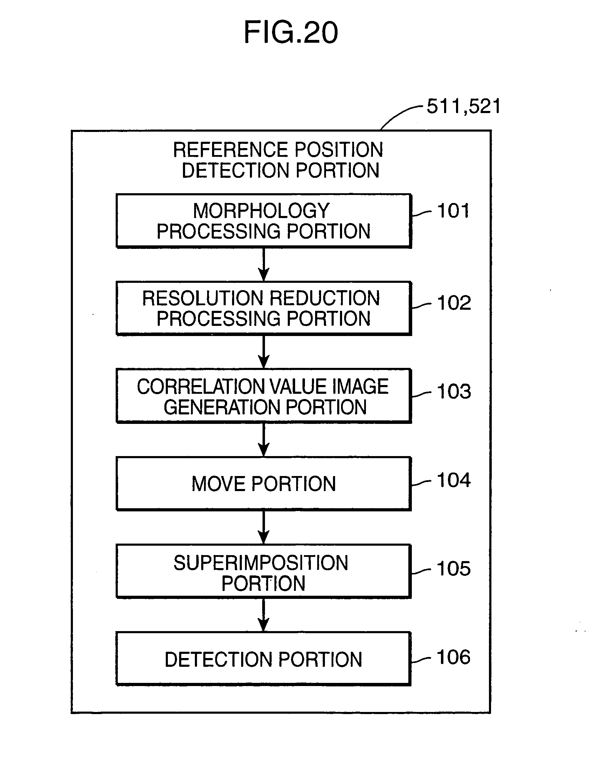

The detailed configurations of the reference position detection portions 511 and 521 will now be described. Fig. 20 is a block diagram showing the detailed configurations of the reference position detection portions 511 and 521. Because the reference position detection portions 511 and 521 are identical, the reference position detection portion 511 alone will be described in the following. The reference position detection portion 511 includes a morphology processing portion 101, a resolution reduction processing portion 102, a correlation value image generation portion 103, a move portion 104, a superimposition portion 105, and a detection portion 106.

The morphology processing portion 101 generates a morphology image by applying a filtering processing on the frame image using the maximum filter followed by a filtering processing using the minimum filter, and by subtracting the corresponding frame image from the resulting image. Herein, the filtering processing using the minimum filter referred to herein is a processing by which the minimum luminance among the pixel of interest and eight neighboring pixels surrounding the pixel of interest is adopted as the luminance of the pixel of interest.

The resolution reduction processing portion 102 divides the morphology image into blocks comprising a matrix of a specific number of rows and a specific number of columns, and reduces the resolution of the morphology image by applying the resolution reduction processing by which a representative value, such as the mean value and a median value, of the pixel data in each block is adopted as the luminance of each block.

The correlation value image generation portion 103 generates a left eye correlation value image that indicates the correlation with a left eye local pattern image by applying a filtering processing using a left eye correlation value filter on the morphology image having a reduced resolution, and it also generates a right eye correlation value image that indicates the correlation with a right eye local pattern image by applying a filtering processing using a right eye correlation value filter on the morphology image to which the processing to reduce the resolution has been applied.

The move portion 104 moves the left eye correlation value image and the right eye correlation value image in a specific direction by a specific distance, so that a region representing the left eye in the left eye correlation value image and a region representing the right eye in the right eye correlation value image are moved to the position between the eyebrows.

The superimposition portion 105 superimposes the right eye correlation value image and the left eye correlation value image by performing the filtering processing using the maximum filter on the right eye correlation value image and the left eye correlation value image moved by the move portion 104 and then by multiplying the correlation values of the corresponding pixels, thereby generating a single composite image. The superimposition portion 105 also multiplies the composite image by a face center evaluation image.

The detection portion 106 detects a region in which the luminance is higher than the predetermined value in the synthesized image, and detects the coordinate at the center of this region as the position between the eyebrows.

(Operations of Reference Position Detection Portion)

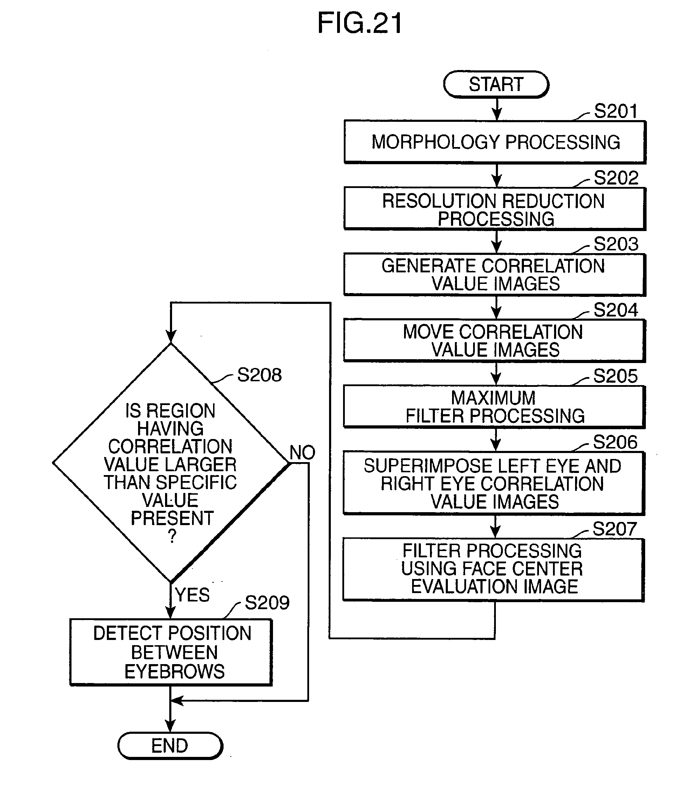

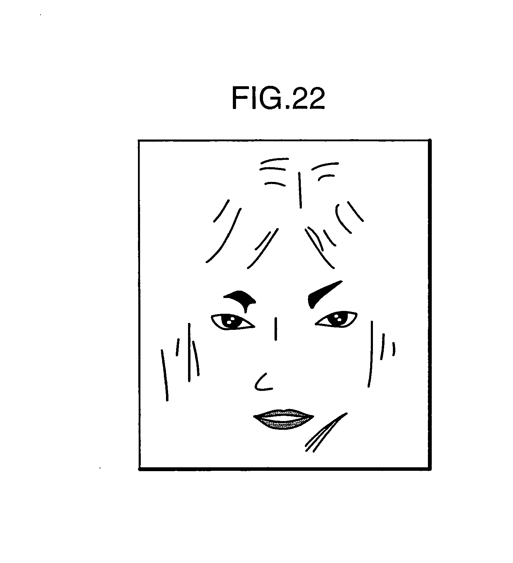

Operations of the reference position detection portion 511 will now be described using the flowchart shown in Fig. 21. Because the reference position detection portion 521 performs the same processings as the reference position detection portion 511 except that a subject to be processed is a frame image, the description of the reference position detection portion 521 is omitted herein. In Step S201, the morphology processing portion 101 performs the morphology processing on the facial image. In this case, as is shown in Fig. 22, images indicating the characteristic portions of the face, such as the contours of the eyes, the bridge of the nose, the eyebrows, and lips, are extracted from the facial image. Referring to Fig. 22, black portions indicate that the luminance is high, and white portions indicate that the luminance is low. Also, although Fig. 22 is shown in binary showing black and white, it is actually a grayscale image.

In Step S202, the resolution reduction processing portion 102 applies the resolution reduction processing on the morphology image. The resolution of the morphology image is thus reduced to length $\times$ width = $30 \times 20$ in contrast to the resolution of the facial image, length x width = $360 \times 240$. This size assumes that one pixel is comparable to one pupil.

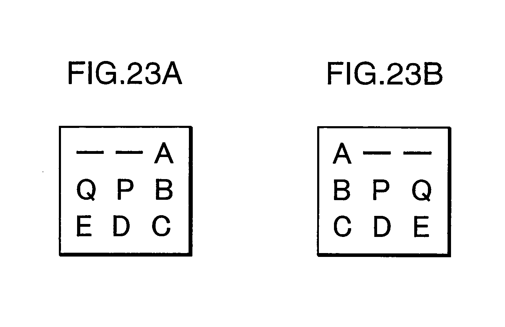

In Step S203, the correlation value image generation portion 103 generates the left eye correlation value image and the right eye correlation value image by respectively applying the filtering processing using the left eye and right eye correlation value filters on the correlation value images having reduced resolutions. Figs. 23A and 23B are views showing the left eye and right eye correlation value filters. Fig. 23A shows the left eye correlation value filter and Fig. 23B shows the right eye correlation value filter. It is understood from the comparison between Fig. 23A and Fig. 23B that the left eye and right eye correlation value filters have a line symmetrical relation. Also, a capital P represents the pixel of interest in the left eye and the right eye correlation value filters.

The correlation value image generation portion 103 generates left eye and right eye correlation value images by using each pixel in the morphology image to which the resolution reduction processing has been applied as a pixel of interest, and finding the correlation value of each pixel of interest by performing a computation expressed by $\mathrm{Max}(P, Q) \times 5 - (A + B + C + D + E)$... Expression (1) using the left eye and right eye correlation value filters. These filters are the filters used to detect a region having a higher luminance than in its surroundings.

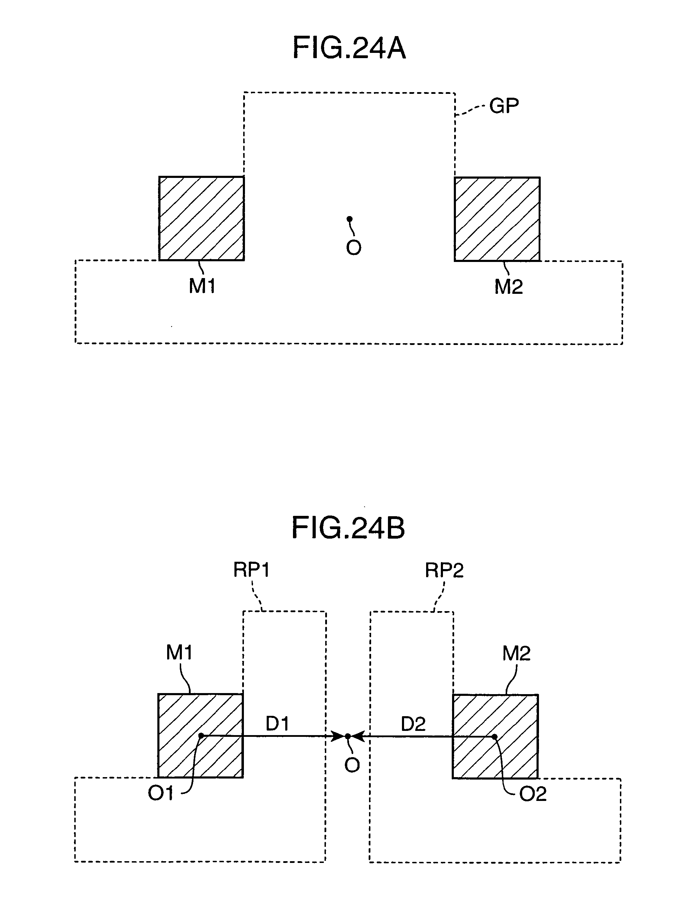

Figs. 24A and 24B are views showing a global pattern image and left eye and right eye local pattern images. Fig. 24A shows the global pattern image and Fig. 24B shows the left eye and right eye local pattern images. In the global pattern image GP and the left eye and right eye local pattern images RP1 and RP2, regions M1 and M2 comprising hatched squares correspond to the pupil of the left eye and the pupil of the right eye, respectively. Also, a point O shown in the global pattern image GP indicates the center of the global pattern image and it corresponds to the position between the eyebrows. Also, points O1 and O2 shown in the left eye and right eye local pattern images RP1 and RP2 correspond to the centers of the pupils of the left and right eyes, respectively.

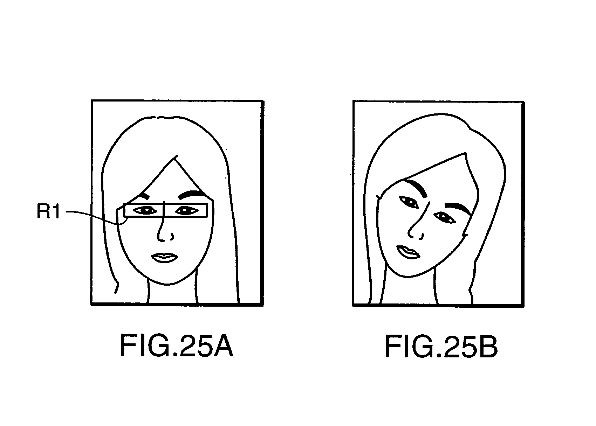

Figs. 25A and 25B are views showing one example of a facial image. Fig. 25A is a case where the face is not tilted and Fig. 25B shows a case where the face is tilted.

A case discussed herein is a processing by which a region R1 including the both eyes is detected from the facial image shown in Figs. 25A and 25B through the pattern matching using the global pattern image GP as the reference image, and the position between the eyebrows is detected on the basis of the region R1 thus detected. As is shown in Fig. 25A, in a case where the face is not tilted, it is possible to detect the position between the eyebrows from the region R1 because the R1 can be extracted. However, in a case where the face is tilted as is shown in Fig. 25B, the position between the eyebrows cannot be detected because it is difficult to detect the region R1. The image processing device therefore divides the global pattern image GP into the left eye and right eye local pattern images RP1 and RP2, so that the both corresponding images can be detected separately. It is thus possible to detect the position between the eyebrows even in the frame image in which the face is tilted.

Because Q is included in the equation of MAX(P, Q) in Expression (1) above, the detection accuracy of the pupil when the face is tilted can be further increased.

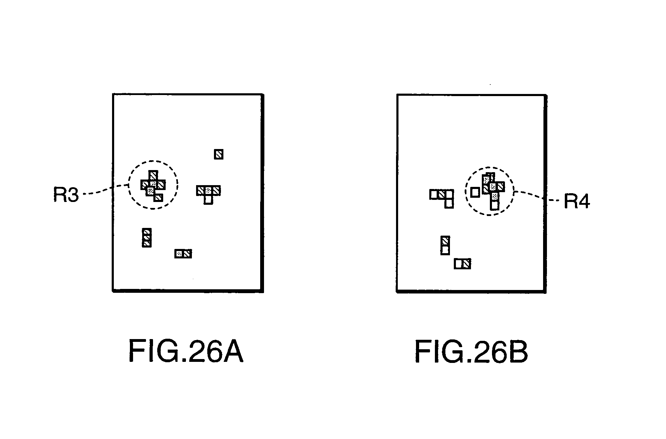

Figs. 26A and 26B are views showing one example of the left eye and right eye correlation value images. Fig.

26A shows the left eye correlation value image and Fig. 26B shows the right eye correlation value image. Referring to Figs. 26A and 26B, the correlation value is indicated by the density of the color, and the correlation value becomes higher with increasing densities of the color. As is shown in Fig. 26A, it is understood that the calculated correlation value in a region R3 corresponding to the left eye is high in the left eye correlation value image. Also, as is shown in FIG. 26B, it is understood that the calculated correlation value in a region R4 corresponding to the right eye is high in the right eye correlation value image.

In Step S204 shown in Fig. 21, the move portion 104 adds the differential vector D1 shown in Fig. 24B to the coordinate of each pixel in the left eye correlation value image, and thereby moves the left eye correlation value image by a quantity comparable to the differential vector D1, and it also adds the differential vector D2 shown in Fig. 24B to the coordinate of each pixel in the right eye correlation value image, and thereby moves the right eye correlation value image by a quantity comparable to the differential vector D2. The differential vector D1 is a vector having the center O of the global pattern image GP and the center O1 of the region M1 as the start point and the center O of the global pattern image GP as the end point, and the differential vector D2 is a vector having the center 02 of the region M2 as the start point and the center O of the global pattern image GP as the end point. Because the differential vectors D1 and D2 can be determined by a relative positional relation of the left eye and right eye local pattern images RP1 and RP2 with respect to the global pattern image GP, the differential vectors D1 and D2 have been stored previously in the storage device.

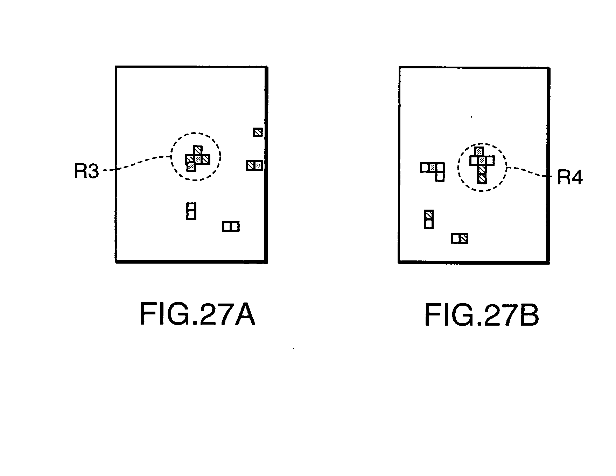

Fig. 27 is a view showing the left eye and right eye correlation value images moved by the move portion 104. Fig. 27A shows the left eye correlation value image and Fig. 27B shows the right eye correlation value image. As is shown in Fig. 27A, it is understood that the region R3 representing the left eye is moved to the position corresponding to the position between the eyebrows. Also, as is shown in Fig. 27B, it is understood that the region R4 representing the right eye is moved to the position corresponding to the position between the eyebrows.

In Step S205 shown in Fig. 21, the superimposition portion 105 applies the filtering processing using the maximum filter to the left eye correlation value image moved by the differential vector D1 and to the right eye correlation value image moved by the differential vector D2. Figs. 28A and 28B are views showing the processing result using the maximum filter. Fig. 28A shows the left eye correlation value image to which the filtering processing using the maximum filter has been applied, and Fig. 28B shows the right eye correlation value image to which the filtering processing by the maximum filter has been applied. As are shown in Figs. 28A and 28B, it is understood that the regions R3 and R4 respectively representing the left and right eyes in Figs. 27A and 27B are enlarged to regions R5 and R6 covering larger ranges, so that the regions R3 and R4 respectively representing the left and right eyes will overlap in a more reliable manner.

In Step S206 shown in Fig. 21, the superimposition portion 105 superimposes the left and right correlation value images by multiplying the correlation values of the corresponding pixels, and thereby generates a single synthesized image. It then multiplies the synthesized image by the face center evaluation image (Step S207) to perform a processing to increase the correlation value in the vicinity of the position corresponding to the position between the eyebrows in the synthesized image. As a result, a difference of the correlation values between the image showing the left and right eyes and the other images appears more noticeably.

Fig. 29 is a view showing the face center evaluation image. As is shown in Fig. 29, the face center evaluation image is an elliptical image in which the major axis is set parallel to the longitudinal direction, and the luminance becomes higher with increasing densities. The ellipse is intended to represent the shape of the face. The luminance reaches the maximum at the position corresponding to the position between the eyebrows, and the luminance becomes higher from the periphery to the position corresponding to the position between the eyebrows. Fig. 30 is a view showing a synthesized image to which the filtering processing using the face center evaluation image has been applied. As is shown in Fig. 30, it is understood that images other than the images corresponding to the left and right eyes are removed.

In Step S208, the detection portion 106 judges whether there is any region having the correlation value higher than a specific value in the synthesized image to which the filtering processing using the face center evaluation image has been applied. Upon judging the presence of a region having the correlation value higher than the specific value (YES in Step S208), it detects the position at the center of the detected region as the position between the eyebrows (Step S209). Meanwhile, when it failed to detect a region having the correlation value higher than the specific value (NO in Step S208), the processing is terminated because of the failure in detecting the position between the eyebrows. When the detection portion 106 detects more than one region having a high correlation value, it judges that the position between the eyebrows is not included or judges the center of a region having the highest mean value of the luminance as being the position between the eyebrows.

As has been described, according to the reference position detection portions 512 and 522, the left and right correlation value images indicating the correlation with the left eye and right eye local pattern images RP1 and RP2 are generated by the filtering processing using the left and right correlation value filters. Hence, in comparison with a case of generating an image that shows the correlation with the entire global pattern image GP, it is possible to obtain a correlation value image showing a high correction even when the facial image underwent deformation, such as rotations, enlargement, and reduction. The both images are then moved by the differential vectors D1 and D2 and superimposed after the filtering processing using the maximum filter is applied. It is thus possible to obtain a synthesized image showing a high correlation at the position corresponding to the position between the eyebrows even when the facial image is deformed as specified above. As a result, the position between the eyebrows can be detected quickly at high accuracy.

(Reference Image Generation Mode)

The reference image generation mode will now be described. Fig. 31 is a functional block diagram showing a makeup simulation device in the reference image generation mode. The makeup simulation device in the reference image generation mode includes a reference image storage portion 11, a still image acquisition portion 301, a manipulation portion 302, a layer image generation portion 303, a transparency layer image generation portion 304, a color layer generation portion 305, a transparency normalization portion 306, a normalized transparency layer image storage portion 307, a color conversion processing portion 308, a color converted layer image storage portion 309, a synthesis portion 310, a display portion 311, and a reference image generation portion 312.

The still image acquisition portion 301 comprises the still image camera 11a and acquires a still image of the face of an individual as the model of the reference image. The manipulation portion 302 comprises the input device 1 and is used by the user to input various manipulation instructions.

The layer image generation portion 303 generates one layer image containing a makeup element image each time the user draws one kind of makeup element image on the still image of the face. As has been described, the layer image comprises the color component made of the RGB value and the transparency of each pixel. The transparency indicates the transparency of the layer image with respect to the still image.

The transparency layer image generation portion 304 generates a transparency layer image corresponding to each layer image in an ordinal layer sequence on the basis of the transparency of the layer image in the same manner as the transparency layer image generation portion 21 shown in Fig. 2. The color layer generation portion 305 generates a color layer corresponding to each layer image in an ordinal layer sequence on the basis of the color component of the layer image in the same manner as the color layer generation portion 31.

The transparency normalization portion 306 generates the normalized transparency layer images by applying the computation expressed by Equation (1) above to each pixel in the transparency layer images, and normalizes the transparency of each pixel of the still image by applying the computation expressed by Equation (2) above to each pixel in the still image in the same manner as the transparency normalization portion 22 shown in Fig. 2.

The normalized transparency layer image storage portion 307 comprises the RAM 4, and stores the normalized transparency layer images and the normalized transparency of each pixel in the facial image. The color conversion processing portion 308 generates the color converted layer image corresponding to each layer image in an ordinal layer sequence by converting the RGB value of the color layers and the RGB value of each pixel in the still image to the HSV color system, performing the color conversion processing expressed by Equation (3) through Equation (5) above, and converting the resulting image further to the RGB color system in the same manner as the color conversion processing portion 32.

The color converted layer image storage portion 309 comprises the RAM 4, and stores the color converted layer images generated by the color conversion processing portion 308.

The synthesis portion 310 synthesizes the color converted layer images and the still image by means of alpha blending using the transparency in each pixel of the normalized transparency layer images as the alpha value of each pixel of the color converted layer images in the same manner as the synthesis portion 70 shown in Fig. 2.

The display portion 311 comprises the display device 6, and displays an image synthesized by the synthesis portion 310. The reference image generation portion 312 makes the reference image storage portion 11 store the layer images generated by the layer image generation portion 303 and the still image acquired by the still image acquisition portion 301 as the reference image.

Operations of the makeup simulation device in the reference image generation mode will now be described using the flowchart shown in Fig. 32. Initially, in Step S301, the still image acquisition portion 301 acquires a still image of the face of an individual as the model of the reference image. In this case, the still image of the face of an individual, for example, as the one shown in Fig. 6, is acquired.

In Step S302, the layer image generation portion 303 accepts a drawing input of the makeup element image by the user via the manipulation portion 302, and in Step S303, it generates a layer image containing a makeup element image each time it accepts the drawing input of one kind of makeup element image.

In this case, the layer image generation portion 303 makes the display portion 311 display the still image acquired by the still image acquisition portion 301, and accepts the makeup element image drawn on the displayed still image with the use of the pen tablet or the like. The makeup element image thus accepted is displayed on the display portion 311. Whether one kind of makeup element image has been inputted is judged according to an instruction from the user.

At this stage, an image made by merely superimposing the makeup element image shown by the transparency and the color component in one color on the still image is displayed on the display portion 311, and the makeup element image is displayed unnaturally with a feeling of strangeness.

When an instruction to synthesize the layer images generated in Step S303 and the still image is inputted by the user in Step S304 (YES in Step S304), the flow proceeds to the processing in Step S306. On the other hand, when an instruction to synthesize the layer images into the still image is not inputted in Step S304 (NO in Step S304), the flow proceeds to the processing in Step S305.

When the user gives an instruction to end the reference generation mode in Step S305 (YES in Step S305), the processing is terminated. On the other hand, when the user does not give an instruction to end the reference generation mode in Step S305 (NO in Step S305), the flow returns to the processing in Step S302.

In Step S306, the transparency layer image generation portion 304 generates the transparency layer image corresponding to each layer image in an ordinal layer sequence on the basis of the transparency of the layer image. In Step S307, the color layer generation portion 305 generates the color layer corresponding to each layer image in an ordinal layer sequence on the basis of the color component of the layer image.

In Step S308, the transparency normalization portion 306 generates the normalized transparency layer images by normalizing the transparency of each pixel in the transparency layer images, and makes the normalized transparency layer image storage portion 307 store the normalized transparency layer images. It also normalizes the transparency of each pixel in the still image, and makes the normalized transparency layer image storage portion 307 store the normalized transparencies.

In Step S309, the color conversion processing portion 308 generates the color converted layer image corresponding to each layer image in an ordinal layer sequence on the basis of the color layers and the still image, and makes the color converted layer image storage portion 309 store the color converted layer images.

In Step S310, the synthesis portion 310 synthesizes the still image and the color converted layer images by using alpha blending. In Step S311, the display portion 311 displays the image synthesized by the synthesis portion 310. In this case, the makeup element images displayed on the still image unnaturally without giving a sense of strangeness at the stage of Step S302 are now displayed on the still image naturally without giving a sense of strangeness.

When the user gives an instruction to generate the reference image in Step S312 (YES in Step S312), the flow proceeds to Step S313. The reference image generation portion 312 thus generates the reference image by synthesizing the layer images generated by the layer image generation portion 303 and the still image acquired by the still image acquisition portion 301, and makes the reference image storage portion 11 store the reference image, after which the reference image generation mode is terminated.

Meanwhile, when the user does not give an instruction to generate the reference image in Step S312 (NO in Step S312), the flow returns to the processing in Step S302.

The invention may adopt aspects as follows.

(1) In the embodiment above, the makeup simulation program is installed in the computer to cause the computer to function as the makeup simulation device. The invention, however, is not limited to this configuration, and the makeup simulation device may be formed using a special hardware circuit.

(2) In the embodiment above, the layer image contains one kind of makeup element image. The invention, however, is not limited to this configuration, and it may contain more than one makeup element image having the identical color component.

(3) In the embodiment above, the still image is acquired by the still image camera 11a. The invention, however, is not limited to this configuration, and one frame image of a moving image taken by the moving image camera may be acquired as a still image. When configured in this manner, the still image camera 11a can be omitted.

(Summary)

(1) A makeup simulation program causes a computer to perform a makeup simulation using a reference image comprising n (n is a positive integer) layer images and one facial image, the reference image having been generated previously according to a drawing instruction inputted by a user via a manipulation device, each of the n layer images containing at least one makeup element image in one color, and the makeup simulation program is characterized by causing the computer to function as means as follows: first image generation means for generating n first images corresponding to the respective n layer images on the basis of a transparency set in each pixel in each layer image for each of the n layer images; target image acquisition means for acquiring a simulation target image containing a face of an individual as a simulation target; mesh setting means for setting a mesh in a facial region contained in the reference image and setting a mesh in a facial region contained in the simulation target image; deformation means for calculating a difference of positions between corresponding vertices of the meshes set in the reference image and in the simulation target image, and deforming the makeup element image contained in each of the n first images to fit in the facial region contained in the simulation target image on the basis of the calculated difference; second image generation means for generating n second images corresponding to the respective n layer images by performing a specific color conversion processing using color components of the n layer images on the simulation target image; and synthesis means for determining transparencies of the respective n second images and the simulation target image on the basis of the n first images, and synthesizing the simulation target image and the n second images using the determined transparencies.

According to this configuration, the user is able to quickly obtain a high-quality makeup simulation image on which makeup is virtually applied with simple manipulations. Also, it is easy to make a modification, such as the one for deleting a part of makeup element images from the simulation target image on which makeup is virtually applied or changing colors of a part of makeup element images.

(2) It is preferable that the first image generation means generates the first images by generating transparency layer images on the basis of the transparency of each pixel set in the layer images and normalizing the transparency of each pixel in the generated transparency layer image, and that the synthesis means synthesizes the simulation target image and the second images by of alpha blending.

According to this configuration, because the transparency of each pixel in the transparency layer images is normalized, the synthesis means can generate the same image even when the order of the layer images is rearranged.

(3) It is preferable that the second image generation means generates the second images by converting each of a color component of each layer image and respective color components of the simulation target image from an RGB color system to an HSV color system, performing the color conversion processing expressed by Equation (A) through Equation (C) below on both the converted color components, and converting resulting images from the HSV color system to the RGB system:

$$H_r = H_c \qquad \text{… Equation (A)}$$

$$S_r = 0.8 \times S_f + 0.2 \times S_c \text{ … Equation (B)}$$

$$V_r = 0.8 \times V_f + 0.2 \times V_c \text{ … Equation (C)}$$

where $H_c$, $S_c$, and $V_c$ represent an HSV value of the color component of layer image, $S_f$ and $V_f$ represent the HSV value of each pixel in the simulation target image, and $H_r$, $S_r$, and $V_r$ represent the HSV value of each pixel in the second images.

According to this configuration, the hue of the makeup element image can be changed while keeping the brightness and saturation of the simulation target image to some extent. It is thus possible to display the makeup element image naturally on the simulation target image.

(4) It is preferable that the mesh setting portion includes: initial mesh storage means for storing an initial mesh in which all vertices comprise characteristic vertices set at characteristic positions of the face and other floating vertices; reference position detection means for detecting a specific reference position from the facial region contained in each of the simulation target image and the reference image; characteristic point extraction means for extracting characteristic points corresponding to the characteristic vertices from each of the simulation target image and the reference image on the basis of the reference position detected by the reference position detection means; and vertex migration means for moving the characteristic vertices to the corresponding characteristic points extracted by the characteristic point extraction means, and moving the floating vertices while keeping distances among respective vertices of the initial mesh constant.

According to this configuration, the mesh can be set in the reference image and in the simulation target image while the positional relation among the vertices of the initial mesh is maintained in a well balanced manner.

(5) It is preferable that the vertex migration means generates 3-D data for each vertex of the initial mesh by providing a height component orthogonal to an image plane, and moves the floating vertices by providing a certain height component to the floating vertices and positioning the characteristic vertices on the image plane while applying computations expressed by Equation (D) and Equation (E) below on each vertex a predetermined number of times:

(Mathematical Formula 5)

$$\vec{P'_i} = \vec{P_i} - \lambda\,(\,|\,\vec{P_i} - \vec{P_j}\,| - l_{ij})(\vec{P_i} - \vec{P_j}) \qquad \cdots \text{EQUATION (D)}$$

$$\vec{P'_j} = \vec{P_j} + \lambda\,(\,|\,\vec{P_i} - \vec{P_j}\,| - l_{ij})(\vec{P_i} - \vec{P_j}) \qquad \cdots \text{EQUATION (E)}$$

where a vector $P_i$ represents a coordinate of the vertex of the mesh, a vector $P_j$ represents a coordinate of the vertex of the mesh adjacent to the vector $P_i$, a vector $P'_i$ represents the vector $P_i$ to which the computations have been applied, a vector $P'_j$ represents the vector $P_j$ to which the computations have been applied, $l_{ij}$ represents a length of a line segment linking the vector $P_i$ and the vector $P_j$, and $\lambda$ represents a constant value.

According to this configuration, it is possible to prevent the polygons forming the mesh from overlapping one on another while maintaining distances among the respective vertices of the initial mesh constant.

(6) It is preferable that the reference position detection means detects a position between eyebrows in each of the reference image and the simulation target image as the reference position, using a left eye segment image and a right eye segment image that form an eye region image comprising a region containing left and right eyes and the position between the eyebrows, and includes: correlation value image generation means for generating a left eye correlation value image indicating a correlation of the left eye segment image with the face, and generating a right eye correlation value image indicating a correlation of the right eye segment image with the face; correlation value image moving means for moving the left eye and right eye correlation value images on the basis of a relative positional relation of the left eye segment image and the right eye segment image with respect to the eye region image, so that a region indicating a high correlation within the left eye correlation value image and a region indicating a high correlation within the right eye correlation value image overlap at the position between the eyebrows; correlation value image superimposing means for superimposing the left eye and right eye correlation images that have been moved by the correlation value image moving means; and position-between-eyebrows detection means for detecting the position between the eyebrows by detecting a region having a correlation value higher than a specific value in the left eye and right eye correlation value images superimposed by the correlation value image superimposing means.

According to this configuration, the left eye correlation value image indicating the correlation of the left eye segment image forming the eye region image with the facial image, and the right eye correlation value image indicating the correlation of the right eye segment image with the facial image are generated. Because the left eye and the right eye correlation value images are generated not using the eye region image, but using the left eye and right eye segment images, which are segment images of the eye region image, the left eye and right eye correlation value images are the images indicating a higher correlation than the correlation value image of the eye region image and the facial image in a case where the facial region underwent deformation, such as rotations, enlargement, etc. with respect to the eye region image.

The left eye and right eye correlation value images are moved in such a manner that the regions indicating high correlations in the both images overlap at the position between the eyebrows, and the left eye and the right eye correlation value images are superimposed. A region having a correlation value higher than a specific value is detected in the both correlation value images thus superimposed, and the position between the eyebrows is detected consequently.

In a case where the left eye and right eye segment images detect the left eye and the right eye, respectively, the both correlation value images indicate a high correlation. Hence, by moving the both correlation value images so that the regions having high correlation values overlap and then superimposing the both images, the superimposed image indicates a further higher correlation.

Meanwhile, in a case where the left eye and right eye segment images do not detect the left eye and the right eye, respectively, the left eye or right eye correlation value image does not show a high correlation. An image generated by superimposing the left eye and right eye correlation value images therefore does not show a high correlation.

Hence, once a region indicating a high correlation can be detected from the image obtained by superimposing the left eye and right eye correlation value images, it is possible to detect the position between the eyebrows. It is thus possible to detect the position between the eyebrows at high accuracy even when the facial image is enlarged, reduced, rotated, etc. with respect to the eye region image. Further, the position between the eyebrows can be detected quickly because this makeup simulation program involves no complicated processing, such as the one to calculate the correlation twice as in the invention described in JP-A-2003-216931.

(7) It is preferable that the correlation value image generation means generates the left eye and right eye correlation value images by applying a morphology processing on the facial image.

According to this configuration, the morphology processing to highlight an image having luminance lower than the surrounding is applied to the facial image to highlight the images of the left eye and the right eye, and the left eye and right eye correlation value images are generated from the facial image to which the morphology processing has been applied. It is thus possible to obtain correlation value images that indicate correlations of the left eye and right eye segment images with the facial image more precisely.

(8) It is preferable that the correlation value image generation means generates the left eye and right eye correlation value images by further applying a processing to reduce a resolution on the images to which the morphology processing has been applied.

According to this configuration, the processing to reduce the resolution is further applied to the facial image to which the morphology processing has been applied. Hence, not only is it possible to generate the left eye and right eye correlation value images quickly, but it is also possible to make the following processings simpler.

(9) It is preferable that the correlation value image superimposing means superimposes the left eye and right eye correlation value images by multiplying corresponding pixel data of both the correlation value images moved by the correlation value image moving means.

According to this configuration, the left eye and right eye correlation value images are superimposed by multiplying the corresponding pixel data of the left eye and right eye correlation value images. It is thus possible to obtain the left eye and right eye correlation value images that noticeably shows a difference between a region having a high correlation and a region having a low correlation, which can in turn increase the detection accuracy.

(10) It is preferable that the correlation value image superimposing means superimposes the left eye and right eye correlation value images by applying a processing to enlarge a region having a high correlation on the left eye and right eye correlation value images moved by the correlation value image moving means.

According to this configuration, the left eye and right eye correlation value images are superimposed by applying the processing to enlarge the regions having high correlations to the both correlation value images. It is thus possible to superimpose the regions having high correlations at a higher degree of accuracy even when the left eye and right eye segment images are set smaller or when the right eye and left eye are deformed markedly with respect to the eye region image.

(11) It is preferable that the correlation value image superimposing means performs a processing to further increase a correlation value in the region having the high correlation on the left eye and right eye correlation value images moved by the correlation value image moving means.

According to this configuration, because the processing to increase the correlation value in the vicinity of the position between the eyebrows is performed, a difference of the correlation values between the regions of the left eye and the right eye and other regions becomes noticeable. It is thus possible to detect the position between the eyebrows more precisely.

(12) It is preferable that the simulation target image is each frame image in a moving image.

According to this configuration, it is possible to perform the makeup simulation on a moving image.

(13) A makeup simulation device of the invention is a makeup simulation device that performs a makeup simulation using a reference image comprising n (n is a positive integer) layer images and one facial image, the reference image having been generated previously according to a drawing instruction inputted by a user via a manipulation device, each of the n layer images containing at least one makeup element image in one color, the makeup simulation device being characterized by including: first image generation means for generating n first images corresponding to the respective n layer images on the basis of a transparency set in each pixel in each layer image for each of the n layer images; target image acquisition means for acquiring a simulation target image containing a face of an individual as a simulation target; mesh setting means for setting a mesh in a facial region contained in the reference image and setting a mesh in a facial region contained in the simulation target image; deformation means for calculating a difference of positions between corresponding vertices of the meshes set in the reference image and in the simulation target image, and deforming the makeup element image contained in each of the n first images to fit in the facial region contained in the simulation target image on the basis of the calculated difference; second image generation means for generating n second images corresponding to the respective n layer images by performing a specific color conversion processing using color components of the n layer images on the simulation target image; and synthesis means for determining transparencies of the respective n second images and the simulation target image on the basis of the n first images, and synthesizing the simulation target image and the n second images using the determined transparencies.

According to this configuration, the user is able to quickly obtain a high-quality makeup simulation image on which makeup is virtually applied with simple manipulations. Also, it is easy to make a modification, such as the one for deleting a part of makeup element images from the simulation target image on which makeup is virtually applied or changing colors of a part of makeup element images.

(14) A makeup simulation method of the invention is a makeup simulation method that causes a computer to perform a makeup simulation using a reference image comprising n (n is a positive integer) layer images and one facial image, the reference image having been generated previously according to a drawing instruction inputted by a user via a manipulation device, each of the n layer images containing at least one makeup element image in one color, the computer including first image generation means, target image acquisition means, mesh setting means, deformation means, second image generation means, and synthesis means, the makeup simulation method being characterized by including: a step of generating n first images corresponding to the respective n layer images on the basis of a transparency set in each pixel in each layer image for each of the n layer images by the first image generation means; a step of acquiring a simulation target image containing a face of an individual as a simulation target by the target image acquisition means; a step of setting a mesh in a facial region contained in the reference image and setting a mesh in a facial region contained in the simulation target image by the mesh setting means; a step of calculating a difference of positions between corresponding vertices of the meshes set in the reference image and in the simulation target image, and deforming the makeup element image contained in each of the n first images to fit in the facial region contained in the simulation target image on the basis of the calculated difference by the deformation means; a step of generating n second images corresponding to the respective n layer images by performing a specific color conversion processing using color components of the n layer images on the simulation target image by the second image generation means; and a step of determining transparencies of the respective n second images and the simulation target image on the basis of the n first images, and synthesizing the simulation target image and the n second images using the determined transparencies by the synthesis means.

According to this configuration, the user is able to quickly obtain a high-quality makeup simulation image on which makeup is virtually applied with simple manipulations. Also, it is easy to make a modification, such as the one for deleting a part of makeup element images from the simulation target image on which makeup is virtually applied or changing colors of a part of makeup element images.

**Claims**

1. A makeup simulation program that causes a computer to perform a makeup simulation using a reference image comprising n (n is a positive integer) layer images and one facial image, the reference image having been generated previously according to a drawing instruction inputted by a user via a manipulation device, each of the n layer images containing at least one makeup element image in one color, the makeup simulation program being **characterized by** causing the computer to function as means as follows:

   first image generation means for generating n first images corresponding to the respective n layer images on the basis of a transparency set in each pixel in each layer image for each of the n layer images;
   target image acquisition means for acquiring a simulation target image containing a face of an individual as a simulation target;
   mesh setting means for setting a mesh in a facial region contained in the reference image and setting a mesh in a facial region contained in the simulation target image;
   deformation means for calculating a difference of positions between corresponding vertices of the meshes set in the reference image and in the simulation target image, and deforming the makeup element image contained in each of the n first images to fit in the facial region contained in the simulation target image on the basis of the calculated difference;
   second image generation means for generating n second images corresponding to the respective n layer images by performing a specific color conversion processing using color components of the n layer images on the simulation target image; and
   synthesis means for determining transparencies of the respective n second images and the simulation target image on the basis of the n first images, and synthesizing the simulation target image and the n second images using the determined transparencies.

2. The makeup simulation program according to Claim 1, wherein:

   the first image generation means generates the first images by generating transparency layer images on the basis of the transparency of each pixel set in the layer images and normalizing the transparency of each pixel in the generated transparency layer images; and
   the synthesis means synthesizes the simulation target image and the second images by alpha blending.

3. The makeup simulation program according to Claim 2, wherein:

   the second image generation means generates the second images by converting each of a color component of each layer image and respective color components of the simulation target image from an RGB color system to an HSV color system, performing the color conversion processing expressed by Equation (A) through Equation (C) below on both the converted color components, and converting resulting images from the HSV color system to the RGB system:

$$H_r = H_c \quad \dots \text{Equation (A)}$$

$$S_r = 0.8 \times S_f + 0.2 \times S_c \dots \text{Equation (B)}$$

$$V_r = 0.8 \times V_f + 0.2 \times V_c \dots \text{Equation (C)}$$

where $H_c$, $S_c$, and $V_c$ represent an HSV value of the color component of layer image, $S_f$ and $V_f$ represent the HSV value of each pixel in the simulation target image, and $H_r$, $S_r$, and $V_r$ represent the HSV value of each pixel in the second images.

4. The makeup simulation program according to any of Claims 1 through 3, wherein the mesh setting portion includes:

initial mesh storage means for storing an initial mesh in which all vertices comprise characteristic vertices set at characteristic positions of the face and other floating vertices;
reference position detection means for detecting a specific reference position from the facial region contained in each of the simulation target image and the reference image;
characteristic point extraction means for extracting characteristic points corresponding to the characteristic vertices from each of the simulation target image and the reference image on the basis of the reference position detected by the reference position detection means; and
vertex migration means for moving the characteristic vertices to the corresponding characteristic points extracted by the characteristic point extraction means, and moving the floating vertices while keeping distances among respective vertices of the initial mesh constant.

5. The makeup simulation program according to Claim 4, wherein:

the vertex migration means creates 3-D data for each vertex of the initial mesh by providing a height component orthogonal to an image plane, and moves the floating vertices by providing a certain height component to the floating vertices and positioning the characteristic vertices on the image plane while applying computations expressed by Equation (D) and Equation (E) below on each vertex a predetermined number of times:
(Mathematical Formula 1)

$$\vec{P}'_i = \vec{P}_i - \lambda \left( \left| \vec{P}_i - \vec{P}_j \right| - l_{ij} \right) (\vec{P}_i - \vec{P}_j) \quad \cdots \text{EQUATION (D)}$$

$$\vec{P}'_j = \vec{P}_j + \lambda \left( \left| \vec{P}_i - \vec{P}_j \right| - l_{ij} \right) (\vec{P}_i - \vec{P}_j) \quad \cdots \text{EQUATION (E)}$$

where a vector $P_i$ represents a coordinate of the vertex of the mesh, a vector $P_j$ represents a coordinate of the vertex of the mesh adjacent to the vector $P_i$, a vector $P'_i$ represents the vector $P_i$ to which the computations have been applied, a vector $P'_j$ represents the vector $P_j$ to which the computations have been applied, $l_{ij}$ represents a length of a line segment linking the vector $P_i$ and the vector $P_j$, and $\lambda$ represents a constant value.

**6.** The makeup simulation program according to Claim 4, wherein the reference position detection means detects a position between eyebrows in each of the reference image and the simulation target image as the reference position, using a left eye segment image and a right eye segment image that form an eye region image comprising a region containing left and right eyes and the position between the eyebrows, and includes:

correlation value image generation means for generating a left eye correlation value image indicating a correlation of the left eye segment image with the face, and generating a right eye correlation value image indicating a correlation of the right eye segment image with the face;

correlation value image moving means for moving the left eye and right eye correlation value images on the basis of a relative positional relation of the left eye segment image and the right eye segment image with respect to the eye region image, so that a region indicating a high correlation within the left eye correlation value image and a region indicating a high correlation within the right eye correlation value image overlap at the position between the eyebrows;

correlation value image superimposing means for superimposing the left eye and right eye correlation images that have been moved by the correlation value image moving means; and

position-between-eyebrows detection means for detecting the position between the eyebrows by detecting a region having a correlation value higher than a specific value in the left eye and right eye correlation value images superimposed by the correlation value image superimposing means.

**7.** The makeup simulation program according to Claim 6, wherein:

the correlation value image generation means generates the left eye and right eye correlation value images by applying a morphology processing on the facial image.

**8.** The makeup simulation program according to Claim 7, wherein:

the correlation value image generation means generates the left eye and right eye correlation value images by further applying a processing to reduce a resolution on the images to which the morphology processing has been applied.

**9.** The makeup simulation program according to Claim 6, wherein:

the correlation value image superimposing means superimposes the left eye and right eye correlation value images by multiplying corresponding pixel data of both the correlation value images moved by the correlation value image moving means.

**10.** The makeup simulation program according to Claim 9, wherein:

the correlation value image superimposing means superimposes the left eye and right eye correlation value images by applying a processing to enlarge a region having a high correlation on the left eye and right eye correlation value images moved by the correlation value image moving means.

**11.** The makeup simulation program according to Claim 10, wherein:

the correlation value image superimposing means performs a processing to further increase a correlation value in the region having the high correlation on the left eye and right eye correlation value images moved by the correlation value image moving means.

**12.** The makeup simulation program according to Claim 1, wherein:

the simulation target image is each frame image in a moving image.

**13.** A makeup simulation device that performs a makeup simulation using a reference image comprising n (n is a positive integer) layer images and one facial image, the reference image having been generated previously according to a drawing instruction inputted by a user via a manipulation device, each of the n layer images containing at least one makeup element image in one color, the makeup simulation device being **characterized by** including:

first image generation means for generating n first images corresponding to the respective n layer images on the basis of a transparency set in each pixel in each layer image for each of the n layer images;

target image acquisition means for acquiring a simulation target image containing a face of an individual as a simulation target;

mesh setting means for setting a mesh in a facial region contained in the reference image and setting a mesh in a facial region contained in the simulation target image;

deformation means for calculating a difference of positions between corresponding vertices of the meshes set in the reference image and in the simulation target image, and deforming the makeup element image contained in each of the n first images to fit in the facial region contained in the simulation target image on the basis of the calculated difference;

second image generation means for generating n second images corresponding to the respective n layer images by performing a specific color conversion processing using color components of the n layer images on the simulation target image; and

synthesis means for determining transparencies of the respective n second images and the simulation target image on the basis of the n first images, and synthesizing the simulation target image and the n second images using the determined transparencies.

14. A makeup simulation method that causes a computer to perform a makeup simulation using a reference image comprising n (n is a positive integer) layer images and one facial image, the reference image having been generated previously according to a drawing instruction inputted by a user via a manipulation device, each of the n layer images containing at least one makeup element image in one color, the computer including first image generation means, target image acquisition means, mesh setting means, deformation means, second image generation means, and synthesis means, the makeup simulation method being **characterized by** including:

a step of generating n first images corresponding to the respective n layer images on the basis of a transparency set in each pixel in each layer image for each of the n layer images by the first image generation means;

a step of acquiring a simulation target image containing a face of an individual as a simulation target by the target image acquisition means;

a step of setting a mesh in a facial region contained in the reference image and setting a mesh in a facial region contained in the simulation target image by the mesh setting means;

a step of calculating a difference of positions between corresponding vertices of the meshes set in the reference image and in the simulation target image, and deforming the makeup element image contained in each of the n first images to fit in the facial region contained in the simulation target image on the basis of the calculated difference by the deformation means;

a step of generating n second images corresponding to the respective n layer images by performing a specific color conversion processing using color components of the n layer images on the simulation target image by the second image generation means; and

a step of determining transparencies of the respective n second images and the simulation target image on the basis of the n first images, and synthesizing the simulation target image and the n second images using the determined transparencies by the synthesis means.

# FIG.1

| INPUT DEVICE [1] | ROM [2] | CPU [3] | RAM [4] |
|---|---|---|---|

| EXTERNAL STORAGE DEVICE [5] | DISPLAY DEVICE [6] | RECORDING MEDIUM DRIVE UNIT [7] | I/F [9] | STILL IMAGE CAMERA [11a] |
|---|---|---|---|---|

| RECORDING MEDIUM [8] | MOVING IMAGE CAMERA [10a] |
|---|---|

EP 1 710 746 A1

FIG.2

# FIG.3

```
                    ┌──────────┐
                    │  START   │
                    └──────────┘
                         │
                         ▼
    ┌─────────────────────────────────────────┐
    │   DETERMINE USE-REFERENCE IMAGE          │──── S1
    └─────────────────────────────────────────┘
                         │
                         ▼
    ┌─────────────────────────────────────────┐
    │   GENERATE TRANSPARENCY LAYER IMAGE      │
    │   ON THE BASIS OF TRANSPARENCY           │──── S2
    │   COMPONENT OF LAYER IMAGE               │
    └─────────────────────────────────────────┘
                         │
                         ▼
    ┌─────────────────────────────────────────┐
    │   GENERATE COLOR LAYER ON THE BASIS      │
    │   OF COLOR COMPONENT OF LAYER IMAGE      │──── S3
    └─────────────────────────────────────────┘
                         │
                         ▼
    ┌─────────────────────────────────────────┐
    │   GENERATE NORMALIZED TRANSPARENCY       │
    │   LAYER IMAGE BY NORMALIZING             │──── S4
    │   TRANSPARENCY LAYER IMAGE               │
    └─────────────────────────────────────────┘
                         │
                         ▼
    ┌─────────────────────────────────────────┐
    │   DETECT POSITION BETWEEN EYEBROWS       │──── S5
    └─────────────────────────────────────────┘
                         │
                         ▼
    ┌─────────────────────────────────────────┐
    │   EXTRACT FACIAL REGION FROM FACIAL      │
    │   IMAGE IN USE-REFERENCE IMAGE           │──── S6
    └─────────────────────────────────────────┘
                         │
                         ▼
    ┌─────────────────────────────────────────┐
    │   SPECIFY CONTOURS OF FACIAL PARTS       │──── S7
    └─────────────────────────────────────────┘
                         │
                         ▼
    ┌─────────────────────────────────────────┐
    │   DETECT CHARACTERISTIC POINTS           │──── S8
    └─────────────────────────────────────────┘
                         │
                         ▼
    ┌─────────────────────────────────────────┐
    │   MOVE CHARACTERISTIC VERTICES OF        │
    │   INITIAL MESH TO CHARACTERISTIC POINTS  │──── S9
    │   OF USE-REFERENCE IMAGE                 │
    └─────────────────────────────────────────┘
                         │
                         ▼
    ┌─────────────────────────────────────────┐
    │   ACQUIRE MOVING IMAGE                   │──── S10
    └─────────────────────────────────────────┘
                         │
                         ▼
    ┌─────────────────────────────────────────┐
    │   EXTRACT FRAME IMAGE                    │──── S11
    └─────────────────────────────────────────┘
                         │
                         ▼
                        (1)
```

# FIG.4

①

DETECT POSITION BETWEEN EYEBROWS ——S12

EXTRACT FACIAL REGION
FROM FRAME IMAGE ——S13

SPECIFY CONTOURS
OF FACIAL PARTS ——S14

DETECT CHARACTERISTIC POINTS ——S15

MOVE CHARACTERISTIC VERTICES
OF INITIAL MESH TO CHARACTERISTIC
POINTS OF FRAME IMAGE ——S16

CALCULATE DIFFERENCE BETWEEN
CORRESPONDING VERTICES
OF MESHES SET IN USE-REFERENCE
IMAGE AND FRAME IMAGE ——S17

DEFORM NORMALIZED
TRANSPARENCY LAYER IMAGE ——S18

S23

EXTRACT
NEXT
FRAME
IMAGE

GENERATE COLOR CONVERTED
LAYER IMAGES BY APPLING
COLOR CONVERSION PROCESSING
ON FRAME IMAGE AND COLOR LAYERS ——S19

SYNTHESIZE FRAME IMAGE AND COLOR
CONVERTED LAYER IMAGES ——S20

DISPLAY SYNTHESIZED IMAGE
ON DISPLAY PORTION ——S21

S22

NO — HAVE ALL
FRAME IMAGES BEEN
EXTRACTED?

YES

END

27

FIG.5

$$\beta_i = \frac{\alpha_i^2}{\sum_{j=1}^{n} \alpha_j} \quad \cdots \text{EQUATION (1)}$$

$$\gamma = \frac{\sum_{i=1}^{n} \alpha_i (1-\alpha_i)}{\sum_{j=1}^{n} \alpha_j} \quad \cdots \text{EQUATION (2)}$$

## FIG.6

TP(P11~P18,P21,P22,P31,P32,P41,P42)

# FIG.7

TP'(P11'~P18',P21',P22',P31',P32',P41',P42')

0 TIMES

FIG.8A

FIG.8B

1 TIMES

FIG.9A

FIG.9B

5 TIMES

FIG.10A

FIG.10B

EP 1 710 746 A1

10 TIMES

FIG.11A

FIG.11B

20 TIMES

FIG.12A

FIG.12B

EP 1 710 746 A1

30 TIMES

FIG.13A

FIG.13B

EP 1 710 746 A1

FIG.14A

60 TIMES

FIG.14B

# FIG.15

# FIG.16

E2

E3

E1

E4

# FIG.17

**FIG.18A**

**FIG.18B**

# FIG.19

# FIG.20

511,521

REFERENCE POSITION
DETECTION PORTION

MORPHOLOGY
PROCESSING PORTION — 101

↓

RESOLUTION REDUCTION
PROCESSING PORTION — 102

↓

CORRELATION VALUE IMAGE
GENERATION PORTION — 103

↓

MOVE PORTION — 104

↓

SUPERIMPOSITION
PORTION — 105

↓

DETECTION PORTION — 106

# FIG.21

```
                          ┌─────────────┐
                          │    START    │
                          └─────────────┘
                                 │        S201
                    ┌────────────────────────────┐
                    │   MORPHOLOGY PROCESSING     │
                    └────────────────────────────┘
                                 │        S202
                    ┌────────────────────────────┐
                    │   RESOLUTION REDUCTION      │
                    │        PROCESSING           │
                    └────────────────────────────┘
                                 │        S203
                    ┌────────────────────────────┐
                    │   GENERATE CORRELATION      │
                    │       VALUE IMAGES          │
                    └────────────────────────────┘
                                 │        S204
                    ┌────────────────────────────┐
                    │     MOVE CORRELATION        │
                    │       VALUE IMAGES          │
                    └────────────────────────────┘
                                 │        S205
                    ┌────────────────────────────┐
                    │        MAXIMUM              │
                    │    FILTER PROCESSING        │
                    └────────────────────────────┘
                                 │        S206
                    ┌────────────────────────────┐
                    │  SUPERIMPOSE LEFT EYE AND   │
                    │  RIGHT EYE CORRELATION      │
                    │       VALUE IMAGES          │
                    └────────────────────────────┘
                                 │        S207
                    ┌────────────────────────────┐
                    │    FILTER PROCESSING        │
                    │   USING FACE CENTER         │
                    │    EVALUATION IMAGE         │
                    └────────────────────────────┘
```

S208

IS REGION HAVING CORRELATION VALUE LARGER THAN SPECIFIC VALUE PRESENT ? — NO

YES — S209

DETECT POSITION BETWEEN EYEBROWS

END

# FIG.22

FIG.23A

```
— — A
Q P B
E D C
```

FIG.23B

```
A — —
B P Q
C D E
```

# FIG.24A

GP

M1

O

M2

# FIG.24B

RP1          RP2

M1                              M2

O1    D1    O    D2    O2

FIG.25A

FIG.25B

FIG.26A

FIG.26B

FIG.27A          FIG.27B

FIG.28A

FIG.28B

# FIG.29

# FIG.30

# FIG.31

EP 1 710 746 A1

# FIG.32

START

ACQUIRE STILL IMAGE — S301

ACCEPT DRAWING OF MAKEUP ELEMENT IMAGE — S302

GENERATE LAYER IMAGES — S303

INSTRUCTION TO SYNTHESIZE ? — S304
— NO
— YES

GENERATE TRANSPARENCY LAYER IMAGES — S306

GENERATE COLOR LAYERS — S307

GENERATE NORMALIZED TRANSPARENCY LAYER IMAGES — S308

GENERATE COLOR CONVERTED LAYER IMAGES — S309

SYNTHESIZE STILL IMAGE AND COLOR CONVERTED LAYER IMAGES — S310

DISPLAY SYNTHESIZED IMAGE — S311

INSTRUCTION TO END REFERENCE IMAGE GENERATION MODE ? — S305
— NO
— YES

INSTRUCTION TO GENERATE MAKE UP PATTERN IMAGE? — S312
NO
YES

GENERATE MAKE UP PATTERN IMAGE — S313

END

## INTERNATIONAL SEARCH REPORT

| | International application No. |
|---|---|
| | PCT/JP2004/016125 |

A. CLASSIFICATION OF SUBJECT MATTER
    Int.Cl⁷ G06T1/00

According to International Patent Classification (IPC) or to both national classification and IPC

B. FIELDS SEARCHED

Minimum documentation searched (classification system followed by classification symbols)
    Int.Cl⁷ G06T1/00

Documentation searched other than minimum documentation to the extent that such documents are included in the fields searched

Electronic data base consulted during the international search (name of data base and, where practicable, search terms used)
    JSTPLUS(JOIS)

C. DOCUMENTS CONSIDERED TO BE RELEVANT

| Category* | Citation of document, with indication, where appropriate, of the relevant passages | Relevant to claim No. |
|---|---|---|
| X<br>A | JP 2000-194835 A  (Kao Corp.),<br>14 July, 2000 (14.07.00),<br>Par. Nos. [0016] to [0035]; all drawings<br>(Family: none) | 1,2,12,13,14<br>3-11 |
| A | JP 11-143352 A  (Kabushiki Kaisha Onishi<br>Netsugaku),<br>28 May, 1999 (28.05.99),<br>Full text; all drawings<br>(Family: none) | 1-14 |
| A | JP 09-073559 A  (Fujitsu Ltd.),<br>18 March, 1997 (18.03.97),<br>Full text; all drawings<br>(Family: none) | 1-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    02 December, 2004 (02.12.04) | Date of mailing of the international search report<br>    21 December, 2004 (21.12.04) |
|---|---|
| Name and mailing address of the ISA/<br>    Japanese Patent Office | Authorized officer |
| Facsimile No. | Telephone No. |

Form PCT/ISA/210 (second sheet) (January 2004)

56

**INTERNATIONAL SEARCH REPORT**

International application No.

PCT/JP2004/016125

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-044837 A (Digital Fashon Ltd.), 14 February, 2003 (14.02.03), Full text; all drawings (Family: none) | 1-14 |
| A | Takao FURUKAWA, Yoshiyuki SAKAGUCHI, Akira TSUKADA, "Real Time Makeup Simulator", Dai 19 Kai Sensing Forum Shiryo, 17 September, 2002 (17.09.02), 19th, pages 53 to 58 | 1-14 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003044837 A

- JP 2003216931 A